(19) Europäisches Patentamt / European Patent Office / Office européen des brevets

(11) **EP 3 008 108 B1**

(12) **EUROPÄISCHE PATENTSCHRIFT**

(45) Veröffentlichungstag und Bekanntmachung des Hinweises auf die Patenterteilung:
**05.08.2020 Patentblatt 2020/32**

(51) Int Cl.:
***C08G 69/28*** *(2006.01)*

(21) Anmeldenummer: **14729014.2**

(22) Anmeldetag: **11.06.2014**

(86) Internationale Anmeldenummer:
**PCT/EP2014/062116**

(87) Internationale Veröffentlichungsnummer:
**WO 2014/198764 (18.12.2014 Gazette 2014/51)**

(54) **VERFAHREN ZUR HERSTELLUNG TEILAROMATISCHER COPOLYAMIDE MIT HOHEM DIAMINÜBERSCHUSS**

METHOD FOR PRODUCING PARTIALLY AROMATIC COPOLYAMIDES WITH HIGH DIAMINE EXCESS

PROCÉDÉ DE FABRICATION DE COPOLYAMIDES PARTIELLEMENT AROMATIQUES AVEC UN EXCÈS IMPORTANT EN DIAMINE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.06.2013 EP 13171658**

(43) Veröffentlichungstag der Anmeldung:
**20.04.2016 Patentblatt 2016/16**

(73) Patentinhaber: **BASF SE**
**67056 Ludwigshafen am Rhein (DE)**

(72) Erfinder:
• WILMS, Axel
  67227 Frankenthal (DE)
• SCHMIDT, Christian
  67061 Ludwigshafen (DE)
• RICHTER, Florian
  68159 Mannheim (DE)
• CLAUSS, Joachim
  64297 Darmstadt (DE)
• KORY, Gad
  69251 Gaiberg (DE)
• SCHWIEGK, Stefan
  67433 Neustadt (DE)
• SCHNELLER, Arnold
  64342 Seeheim-Jugenheim (DE)

(56) Entgegenhaltungen:
EP-A1- 0 693 515     WO-A2-2004/055084
DE-C1- 4 142 978

**Beschreibung**

HINTERGRUND DER ERFINDUNG

Die vorliegende Erfindung betrifft ein Verfahren zur Herstellung teilaromatischer Copolyamide mit hohem Überschuss an Diamin im Reaktionsansatz.

STAND DER TECHNIK

Polyamide gehören zu den weltweit in großem Umfang hergestellten Polymeren und dienen neben den Hauptanwendungsbereichen Folien, Fasern und Werkstoffen einer Vielzahl weiterer Verwendungszwecke. Eine wichtige Gruppe der Polyamide sind teilkristalline oder amorphe, thermoplastische, teilaromatische Polyamide, die als wichtige technische Kunststoffe breite Verwendung gefunden haben. Sie zeichnen sich insbesondere durch ihre hohe Temperaturbeständigkeit aus und werde auch als Hochtemperatur-Polyamide (HTPA) bezeichnet. Ein wichtiger Einsatzbereich der HTPA ist die Herstellung von Elektro- und Elektronikbauteilen, wobei insbesondere Polymere auf Basis von Polyphthalamid (PPA) sich für den Einsatz in Lötprozessen unter bleifreien Bedingungen (lead free soldering) eignen. HTPA dienen dabei unter Anderem zur Herstellung von Steckverbindern, Mikroschaltern und -tastern und Halbleiterbauteilen, wie Reflektorgehäusen von Leuchtdioden (LED). Ein weiterer wichtiger Einsatzbereich der HTPA sind Automobil-Anwendungen im Hochtemperaturbereich. Hier kommt es vor allem auf eine gute Wärmealterungsbeständigkeit, hohe Festigkeit und Zähigkeit und Schweißnahtfestigkeit der eingesetzten Polymere an. Amorphe HTPA oder solche mit sehr geringen kristallinen Anteilen sind transparent und eignen sich speziell für Anwendungen, bei denen Durchsichtigkeit vorteilhaft ist. Teilkristalline HTPA zeichnen sich im Allgemeinen durch eine dauerhafte Beständigkeit bei hoher Umgebungstemperatur aus und eignen sich z. B. für Anwendungen im Motorraumbereich.

Polyamide für den Einsatz in Formmassen für Hochtemperaturanwendungen müssen ein komplexes Eigenschaftsprofil aufweisen, wobei gute mechanische Eigenschaften auch bei einer thermischen Langzeitbelastung mit einer guten Verarbeitbarkeit in Einklang gebracht werden muss. Insbesondere sollen diese Polyamide ein ausreichend hohes Molekulargewicht bei gleichzeitig nicht zu hoher Polydispersität (PD) aufweisen. Des Weiteren sollen Sie sich durch gute Polymereigenschaften, insbesondere gute mechanische Eigenschaften, wie Festigkeit und Zähigkeit, eine niedrige Schmelzviskosität und einen geringen Anteil an vernetztem Polymer (Gelanteil) auszeichnen.

Die EP 550 315 A1 beschreibt ein Verfahren zur Herstellung von teilaromatischen Polyamiden, wobei Diamine und Dicarbonsäuren im Wesentlichen in stöchiometrischen Mengen eingesetzt werden.

Die EP 0 693 515 A1 beschreibt ein Verfahren zur Herstellung von Vorkondensaten teilkristalliner oder amorpher, thermoplastisch verarbeitbarer, teilaromatischer Polyamide in einem mehrstufigen Chargenprozess. Dabei werden ebenfalls Diamine und Dicarbonsäuren im Wesentlichen in stöchiometrischen Mengen eingesetzt.

Die DE 41 42 978 beschreibt ein Mehrschicht-Verbundsystem für Mehrweg-Verpackungen aus mindestens einer Copolyamid-Schutzschicht und mindestens einer Copolyamid-Barriereschicht, wobei die Herstellung der eingesetzten Copolyamide diskontinuierlich erfolgt. Nach den Ausführungsbeispielen erfolgt die Herstellung der Copolyamide in der Schmelze in einem Druckautoklaven unter Stickstoffbegasung. Dieses Dokument lehrt nicht, die zur Herstellung der Copolyamide eingesetzte Diaminkomponente in der Eduktzusammensetzung mit einem stöchiometrischen Überschuss von 300 bis 650 meq/kg einzusetzen.

Die WO 2004/055084 beschreibt teilkristalline, thermoplastisch verarbeitbare, teilaromatische Copolyamide, herstellbar durch Kondensation von mindestens den folgenden Monomeren bzw. dessen Vorkondensaten: a) Terephthalsäure b) wenigstens einer dimerisierten Fettsäure mit bis zu 44 Kohlenstoffatomen und c) wenigstens eines aliphatischen Diamins der Formel $H_2N\text{-}(CH_2)_X\text{-}NH_2$, worin x eine ganze Zahl von 4-18 bedeutet. Zur Herstellung der Copolyamide wird pauschal auf bekannte Verfahren verwiesen. Auch dieses Dokument lehrt keinen Überschuss der Diaminkomponente in der Eduktzusammensetzung der Polyamide von 300 bis 650 meq/kg.

Die EP 384 859 beschreibt die Herstellung eines teilaromatischen Polyamids, wobei aromatische Dicarbonsäuren und Alkylpentamethylendiamine eingesetzt werden. Dabei werden die Amin-Comonomere in einem Überschuss von 0,5 bis 7 % relativ zum stöchiometrischen Verhältnis eingesetzt. Für PA 6.T/6.I entspricht dies einem Aminüberschuss von etwa 20 meq/kg Polyamid bis 280 meq/kg Polyamid.

Die US 5,270,437 beschreibt ein Verfahren zur Herstellung von hochmolekularem teilaromatischem Polyamid, bei dem man ein Reaktionsgemisch einsetzt, das eine aromatische Disäure, wenigstens eine stöchiometrische Menge einer Diaminkomponente, wobei die Diaminkomponente mindestens 10 Mol-% 2-Methylpentamethylenediamin enthält, und Ameisensäure umfasst.

Die EP 1 860 134 beschreibt ein teilaromatisches Polyamid, wobei 60 bis 100 Mol% der Diamineinheiten sich von aliphatischen Diaminen mit 9 bis 13 Kohlenstoffatomen ableiten und der Anteil an terminalen Aminogruppen 60 bis 120 meq/kg beträgt.

Die JP 2011225830 beschreibt ein Verfahren zur Herstellung von teilaromatischen Polyamiden, bei dem Pentamethylendiamin, Tetramethylendiamin und Methylpentamethylendiamin mit aromatischen und aliphatischen Carbonsäuren bei erhöhter Temperatur und unter erhöhtem Druck umgesetzt wird. Um äquimolare Mengen von Aminoendgruppen und Carbonsäureendgruppen im Verlauf der Polykondensation beizubehalten und ein hohes Molekulargewicht zu erreichen, wird zu Beginn ein Überschuss von Diamin zugegeben, so dass das molare Verhältnis von Diamin zu Dicarbonsäure in einem Bereich von 1,002 bis 1,15 liegt.

Es besteht weiter ein Bedarf an teilaromatischen Copolyamiden für Polyamid-Formmassen, die über ein verbessertes Eigenschaftsprofil bezüglich ihrer Verarbeitbarkeit und der erhaltenen mechanischen Eigenschaften, speziell bei hohen Temperaturen, verfügen.

Der vorliegenden Erfindung liegt die Aufgabe zu Grunde, teilaromatische Copolyamide mit verbesserten Eigenschaften zur Verfügung zu stellen. Diese sollen sich speziell zur Herstellung von Polyamid-Formmassen eignen, aus denen bevorzugt Bauteile für die Automobilindustrie sowie den Elektro-/Elektronikbereich hergestellt werden.

Überraschenderweise wurde gefunden, dass beim Einsatz höherer Mengen eines aliphatischen oder cycloaliphatischen Diamins im Reaktionsansatz Copolyamide mit einem günstigen Eigenschaftsprofil, wie zuvor beschrieben, erzielt werden. Dies gilt insbesondere dann, wenn die Carbonsäurekomponente Terephthalsäure und/oder Isophthalsäure und die Diaminkomponente Hexamethylendiamin umfasst oder daraus besteht. Insbesondere dient das erfindungsgemäße Verfahren zur Herstellung von PA 6.T/6.I.

Insbesondere ist überraschend, dass die Polydispersität bei dem erfindungsgemäß verwendeten Diamin-Überschuss stärker verringert wird als bei einem Disäureüberschuss bei gleichen Mol-Mengen der Überschusskomponente. Ein solch vorteilhafter Effekt eines Diamin-Überschusses gegenüber einem Disäureüberschuss lässt sich aus dem bekannten Stand der Technik nicht herleiten.

Weiterhin wurde überraschenderweise gefunden, dass der Quotient aus zahlenmittlerem Molekulargewicht Mn und Polydispersität PD eine gut geeignete Maßzahl für die technische Eignung teilaromatischer Polyamide ist. Für viele Anwendungen teilaromatischer Polyamide ist es vorteilhaft, wenn Mn hoch ist (zur Erzielung guter mechanischer Eigenschaften) als auch PD möglichst niedrig (zur Erzielung einer guten Zähigkeit und guter Fließfähigkeit infolge geringer Vernetzung). Damit ist der Quotient aus beiden von großer technischer Bedeutung, da er die beiden Parameter miteinander verknüpft, und nur bei erfindungsgemäßer Vorgehensweise ein Optimum erreicht werden kann. Je höher dieser Quotient, umso günstiger ist das erzielte Eigenschaftsprofil. Die günstige Auswirkung eines optimierten Mn/PD-Verhältnisses spiegelt die erzielte Schmelzeviskosität der teilaromatischen Polyamide wider, die nicht nur von der Molmasse ab, sondern auch sehr stark vom PD-Wert abhängt.

ZUSAMMENFASSUNG DER ERFINDUNG

Ein erster Gegenstand der Erfindung ist ein Verfahren zur Herstellung eines teilaromatischen Polyamids, bei dem man

a) eine Eduktzusammensetzung bereitstellt, die

A) wenigstens eine unsubstituierte oder substituierte aromatische Dicarbonsäuren oder ein Derivat davon und

B) wenigstens ein aliphatisches oder cycloaliphatisches Diamin,
oder ein Salz aus wenigstens einer Verbindung A) und wenigstens einer Verbindung B) enthält,

b) die in Schritt a) bereitgestellte Eduktzusammensetzung in wenigstens eine Polymerisationszone einspeist und einer Polymerisation bei erhöhter Temperatur und zumindest zu Beginn der Polymerisation bei erhöhtem Druck unterzieht,

c) im Verlauf der Polymerisation aus der Polymerisationszone eine wasserhaltige Gasphase entnimmt,
mit der Maßgabe, dass die Diaminkomponente B) in der Eduktzusammensetzung mit einem stöchiometrischen Überschuss von 300 bis 650 meq/kg eingesetzt wird, wobei für den Fall, dass im Verlauf der Polymerisation ein Teil der Diaminkomponente mit der wasserhaltigen Gasphase aus der Polymerisationszone ausgetragen wird, der stöchiometrische Überschuss der Diaminkomponente B) in der Eduktzusammensetzung um den Teil der ausgetragenen Diaminkomponente höher sein muss.

Ein weiterer Gegenstand der Erfindung ist ein teilaromatisches Polyamid, erhältlich durch ein Verfahren, wie zuvor und im Folgenden definiert.

Ein weiterer Gegenstand der Erfindung ist eine Polyamid-Formmasse, enthaltend wenigstens ein Polyamid, erhältlich durch ein Verfahren, wie zuvor und im Folgenden definiert. Ein weiterer Gegenstand der Erfindung ist ein Formkörper, hergestellt aus einer solchen Polyamid-Formmasse.

Ein weiterer Gegenstand der Erfindung ist die Verwendung eines teilaromatischen Polyamids oder einer Formmasse, wie zuvor und im Folgenden definiert, zur Herstellung von Elektro- und Elektronikbauteilen und für Automobil-Anwendungen im Hochtemperaturbereich.

BESCHREIBUNG DER ERFINDUNG

Im Rahmen der Erfindung handelt es sich bei den "zur Amidbildung befähigten Komponenten" um die im Folgenden näher definierten Komponenten A) bis I).

Im Rahmen dieser Anmeldung bezieht sich die Angabe meq/kg auf das Gesamtgewicht der zur Amidbildung eingesetzten Komponenten abzüglich des Gewichts des bei der Amidbildung gebildeten Wassers. Für die Bestimmung der Wassermenge wird dabei von einem vollständigen Umsatz der zur Amidbildung eingesetzten Komponenten ausgegangen. Unter den zur Amidbildung eingesetzten Komponenten werden dabei die Komponenten A), B) und, soweit vorhanden, C) bis I) verstanden. Bezugsgröße ist somit das Polyamid, wie es bei Annahme vollständigen Monomerumsatzes aus den zur Amidbildung eingesetzten Komponenten erhalten wird.

Für Diamine, d. h. Verbindungen mit zwei zur Amidbildung befähigten Aminogruppen gilt 1 mmol/kg = 2 meq/kg.

Erfindungsgemäß wird somit in der Eduktzusammensetzung ein Überschuss an der Diaminkomponente B), angegeben in meq (milliequivalent) pro Kilogramm, relativ zur Dicarbonsäurekomponente A) eingesetzt. Dabei wird ein möglicher Verlust an Diamin mit der im Verlauf der Polymerisation abgetrennten wasserhaltigen Gasphase berücksichtigt. An dem Überschuss der Diaminkomponente B) relativ zur Dicarbonsäurekomponente A) ändert sich nichts, wenn zusätzlich Lactame G) und/oder ω-Aminosäuren H) zur Herstellung der teilaromatischen Polyamide eingesetzt werden, da diese Komponenten das Verhältnis von Aminogruppen zu Carbonsäuregruppen nicht ändern. Das Gleiche gilt für polyfunktionelle Komponenten I) mit gleicher Anzahl Aminogruppen und Carbonsäuregruppen pro Molekül. Monofunktionelle Komponenten E) und F) sowie polyfunktionelle Komponenten I) mit unterschiedlicher Anzahl Aminogruppen und Carbonsäuregruppen pro Molekül werden vorzugsweise nur in so geringen Mengen eingesetzt, dass der stöchiometrische Überschuss an der Diaminkomponente B) relativ zur Dicarbonsäurekomponente A) bestehen bleibt.

Es hat sich dabei überraschenderweise als vorteilhaft erwiesen, wenn die Diaminkomponente B) mit einem Überschuss von 300 bis 650 meq/kg in der Eduktzusammensetzung eingesetzt wird, d. h. mit einem entsprechenden Überschuss gegenüber dem stöchiometrischen Verhältnis von zur Amidbildung befähigten Aminogruppen zu den zur Amidbildung befähigten Carboxylgruppen. Ein solcher Überschuss gegenüber dem stöchiometrischen Verhältnis von zur Amidbildung befähigten Aminogruppen zu den zur Amidbildung befähigten Carboxylgruppen wird im Folgenden verkürzt auch als "stöchiometrischer Überschuss" bezeichnet. Wird im Verlauf der Polymerisation ein Teil der Diaminkomponente mit der wasserhaltigen Gasphase aus der Polymerisationszone ausgetragen, so muss der Überschuss der Diaminkomponente B) in der Eduktzusammensetzung entsprechend höher sein.

Dementsprechend beträgt die Differenz zwischen dem stöchiometrischen Überschuss der Diaminkomponente B) in der Eduktzusammensetzung und dem mit der wasserhaltigen Gasphase aus der Polymerisationszone ausgetragenen Teil der Diaminkomponente vorzugsweise 10 bis 600 meq/kg. Besonders bevorzugt beträgt die Differenz zwischen dem stöchiometrischen Überschuss der Diaminkomponente B) in der Eduktzusammensetzung und dem mit der wasserhaltigen Gasphase aus der Polymerisationszone ausgetragenen Teil der Diaminkomponente 50 bis 500 meq/kg, insbesondere 100 bis 400 meq/kg.

Zur Bestimmung des Teils der Diaminkomponente B), der mit der wasserhaltigen Gasphase aus der Polymerisationszone ausgetragen wird, kann der ausgetragene Strom oder eine genau definierte Teilmenge davon kondensiert und der Anteil der Diaminkomponente B) durch Säure-Titration nach bekannten maßanalytischen Verfahren bestimmt werden. Werden neben der Diaminkomponente weitere flüchtige Bestandteile mit der Gasphase ausgetragen, können diese mit bekannten chromatographischen Verfahren (z. B. Kapillarelektrophorese oder HPLC) identifiziert und quantitativ bestimmt werden.

Durch das erfindungsgemäße Verfahren wird sichergestellt, dass der Überschuss an der Diaminkomponente B) so groß ist, dass ein etwaiger Verlust von Diamin durch Verdampfen und Austragen aus der Polymerisationszone deutlich übertroffen wird. Im Reaktionsgemisch des erfindungsgemäßen Verfahrens ist somit über den gesamten Verlauf der Polykondensation der Gehalt an Diaminkomponente B) im Reaktionsgemisch, entweder als freies Diamin oder als in die Polymerkette eingebundenes Diamin, deutlich über dem stöchiometrischen Gehalt an Diamin, der für einen vollständigen Umsatz des Diamins mit den Dicarbonsäuren benötigt wird. Es wurde überraschenderweise gefunden, dass mit dem erfindungsgemäß eingesetzten Überschuss an Diamin in der Eduktzusammensetzung ein günstiges hohes Molekulargewicht des erhaltenen teilaromatischen Polyamids bei gleichzeitig günstiger niedriger Polydispersität (PD = $M_w/M_n$) erzielt wird. Es wurde weiterhin gefunden, dass dann besonders gute Polymereigenschaften, wie gute mechanische Eigenschaften (z. B. Festigkeit und Zähigkeit), niedrige Schmelzviskosität und ein geringer Gelanteil erzielt werden, wenn der Quotient von zahlenmittlerem Molekulargewicht $M_n$ zu PD wenigstens 7000 beträgt.

Die Monomere der Säure- und der Diaminkomponente sowie der gegebenenfalls eingesetzten Lactamkomponente bilden durch die Kondensation Wiederholungseinheiten bzw. Endgruppen in Form von Amiden aus, die von den jeweiligen Monomeren abgeleitet sind. Diese machen in der Regel 95 Mol-%, insbesondere 99 Mol-% aller im Copolyamid vorliegenden Wiederholungseinheiten und Endgruppen aus. Daneben kann das Copolyamid auch geringe Mengen anderer Wiederholungseinheiten aufweisen, die aus Abbau- oder Nebenreaktionen der Monomere, beispielsweise der Diamine, resultieren können.

Zur Bezeichnung der Polyamide werden im Rahmen der Erfindung zum Teil fachübliche Kurzzeichen verwendet, die aus den Buchstaben PA sowie darauf folgenden Zahlen und Buchstaben bestehen. Einige dieser Kurzzeichen sind in der DIN EN ISO 1043-1 genormt. Polyamide, die sich von Aminocarbonsäuren des Typs $H_2N\text{-}(CH_2)_x\text{-}COOH$ oder den entsprechenden Lactamen ableiten lassen, werden als PA Z gekennzeichnet, wobei Z die Anzahl der Kohlenstoffatome im Monomer bezeichnet. So steht z. B. PA 6 für das Polymere aus ε-Caprolactam bzw. der ω-Aminocapronsäure. Polyamide, die sich von Diaminen und Dicarbonsäuren der Typen $H_2N\text{-}(CH_2)_x\text{-}NH_2$ und $HOOC\text{-}(CH_2)_y\text{-}COOH$ ableiten lassen, werden als PAZ1Z2 gekennzeichnet, wobei Z1 die Anzahl der Kohlenstoffatome im Diamin und Z2 die Anzahl der Kohlenstoffatome in der Dicarbonsäure bezeichnet. Zur Bezeichnung von Copolyamiden werden die Komponenten in der Reihenfolge ihrer Mengenanteile, durch Schrägstriche getrennt, aufgeführt. So ist z. B. PA 66/610 das Copolyamid aus Hexamethylendiamin, Adipinsäure und Sebacinsäure.

Für die erfindungsgemäß eingesetzten Monomere mit einer aromatischen oder cycloaliphatischen Gruppe werden folgende Buchstabenkürzel verwendet: T = Terephthalsäure, I = Isophthalsäure, MXDA = m-Xylylendiamin, IPDA = Isophorondiamin, PACM = 4,4'-Methylenbis(cyclohexylamin), MACM = 2,2'-Dimethyl-4,4'-methylenbis-(cyclohexylamin).

Im Folgenden umfasst der Ausdruck " $C_1\text{-}C_4$-Alkyl" unsubstituierte geradkettige und verzweigte $C_1\text{-}C_4$-Alkylgruppen. Beispiele für $C_1\text{-}C_4$-Alkylgruppen sind insbesondere Methyl, Ethyl, Propyl, Isopropyl, n-Butyl, Isobutyl, sec.-Butyl, tert.-Butyl (1,1-Dimethylethyl).

Bei den im Folgenden genannten aromatischen Dicarbonsäuren, aliphatischen Dicarbonsäuren, cycloaliphatischen Dicarbonsäuren und Monocarbonsäuren können die Carboxylgruppen jeweils in nicht derivatisierter Form oder in Form von Derivaten vorliegen. Bei Dicarbonsäuren kann keine, eine oder beide Carboxylgruppe(n) in Form eines Derivats vorliegen. Geeignete Derivate sind Anhydride, Ester, Säurechloride, Nitrile und Isocyanate. Bevorzugte Derivate sind Anhydride oder Ester. Anhydride von Dicarbonsäuren können in monomerer oder in polymerer Form vorliegen. Bevorzugte Ester sind Alkylester und Vinylester, besonders bevorzugt $C_1\text{-}C_4$-Alkylester, insbesondere die Methylester oder Ethylester. Dicarbonsäuren liegen bevorzugt als Mono- oder Dialkylester, besonders bevorzugt Mono- oder Di-$C_1\text{-}C_4$-alkylester, besonders bevorzugt Monomethylester, Dimethylester, Monoethylester oder Diethylester, vor. Dicarbonsäuren liegen weiterhin bevorzugt als Mono- oder Divinylester vor. Dicarbonsäuren liegen weiterhin bevorzugt als gemischte Ester, besonders bevorzugt gemischte Ester mit unterschiedlichen $C_1\text{-}C_4$-Alkylkomponenten, insbesondere Methylethylester, vor.

Die aromatischen Dicarbonsäuren A) sind bevorzugt ausgewählt unter jeweils unsubstituierter oder substituierter Phthalsäure, Terephthalsäure, Isophthalsäure, Naphthalindicarbonsäuren oder Diphenyldicarbonsäuren und den Derivaten und Mischungen der zuvor genannten aromatischen Dicarbonsäuren.

Substituierte aromatische Dicarbonsäuren A) weisen vorzugsweise wenigstens einen (z. B. 1, 2, 3 oder 4) $C_1\text{-}C_4$-Alkylrest auf. Insbesondere weisen substituierte aromatischen Dicarbonsäuren A) 1 oder 2 $C_1\text{-}C_4$-Alkylreste auf. Diese sind vorzugsweise ausgewählt unter Methyl, Ethyl, n-Propyl, Isopropyl, n-Butyl, iso-Butyl, sek-Butyl und tert-Butyl, besonders bevorzugt Methyl, Ethyl und n-Butyl, insbesondere Methyl und Ethyl und speziell Methyl. Substituierte aromatische Dicarbonsäuren A) können auch weitere funktionelle Gruppen tragen, welche die Amidierung nicht stören, wie beispielsweise 5-Sulfoisophthalsäure, ihre Salze und Derivate. Bevorzugtes Beispiel hierfür ist das Natriumsalz des 5-Sulfoisophthalsäuredimethylesters.

Bevorzugt ist die aromatische Dicarbonsäure A) ausgewählt unter unsubstituierter Terephthalsäure, unsubstituierter Isophthalsäure, unsubstituierten Naphthalindicarbonsäuren, 2-Chloroterephthalsäure, 2-Methylterephthalsäure, 5-Methylisophthalsäure und 5-Sulfoisophthalsäure.

Besonders bevorzugt wird als aromatische Dicarbonsäure A) Terephthalsäure, Isophthalsäure oder ein Gemisch aus Terephthalsäure und Isophthalsäure eingesetzt.

Bevorzugt weisen die teilaromatischen Polyamide einen Anteil von aromatischen Dicarbonsäuren an allen Dicarbonsäuren von wenigstens 50 Mol%, besonders bevorzugt von 70 Mol% bis 100 Mol%, auf. In einer speziellen Ausführungsform weisen die teilaromatischen Polyamide einen Anteil an Terephthalsäure oder Isophthalsäure oder einem Gemisch aus Terephthalsäure und Isophthalsäure, bezogen auf alle Dicarbonsäuren von wenigstens 50 Mol%, bevorzugt von 70 Mol% bis 100 Mol%, auf.

Bevorzugt enthält die in Schritt a) bereitgestellte Eduktzusammensetzung als Komponente A) Terephthalsäure und Isophthalsäure in einem Molmengenverhältnis von 100 : 0 bis 50 : 50, besonders bevorzugt von 90 : 10 bis 60 : 40.

Die aliphatischen oder cycloaliphatischen Diamine B) sind vorzugsweise ausgewählt unter Ethylendiamin, Propylendiamin, Tetramethylendiamin, Heptamethylendiamin, Hexamethylendiamin, Pentamethylendiamin, Octamethylendiamin, Nonamethylendiamin, 2-Methyl-1,8-octamethylendiamin, Decamethylendiamin, Undecamethylendiamin, Dodecamethylendiamin, 2-Methylpentamethylendiamin, 2,2,4-Trimethylhexamethylendiamin, 2,4,4-Trimethylhexamethylendiamin, 5-Methylnonamethylendiamin, 2,4-Dimethyloctamethylendiamin, 5-Methylnonandiamin, Bis-(4-aminocyclohexyl)-methan, 3,3'-Dimethyl-4,4'diaminodicyclohexylmethan und Mischungen davon.

In einer speziellen Ausführungsform handelt es sich bei dem Diamin B) nicht um Pentamethylendiamin, Tetramethylendiamin oder Methylpentamethylendiamin.

Besonders bevorzugt ist das Diamin B) ausgewählt unter Hexamethylendiamin, 2-Methylpentamethylendiamin, Octamethylendiamin, Nonamethylendiamin, Decamethylendiamin, Undecamethylendiamin, Dodecamethylendiamin, Bis-(4-aminocyclohexyl)-methan, 3,3'-Dimethyl-4,4'diaminodicyclohexylmethan und Mischungen davon.

Bevorzugt besteht die Diaminkomponente B) zu mindestens 50 Gew.-%, besonders bevorzugt zu mindestens 75 Gew.-%, insbesondere zu mindestens 90 Gew.-%, speziell zu mindestens 92 Gew.-%, bezogen auf das Gesamtgewicht der Diaminkomponente B), aus Hexamethylendiamin.

In einer speziellen Ausführung enthält die in Schritt a) bereitgestellte Eduktzusammensetzung Hexamethylendiamin als alleiniges Diamin.

In einer speziellen Ausführungsform enthält die in Schritt a) bereitgestellte Eduktzusammensetzung zusätzlich zu den Komponenten A) und B) keine weiteren zur Amidbildung befähigten Komponenten.

In einer weiteren speziellen Ausführungsform enthält die in Schritt a) bereitgestellte Eduktzusammensetzung wenigstens eine weitere zur Amidbildung befähigte Komponente, die ausgewählt ist unter

C) unsubstituierten oder substituierten aromatischen Diaminen,
D) aliphatischen oder cycloaliphatischen Dicarbonsäuren,
E) Monocarbonsäuren,
F) Monoaminen,
G) Lactamen,
H) ω-Aminosäuren,
I) von A) bis H) verschiedenen, damit cokondensierbaren Verbindungen,

und Mischungen davon.

Bevorzugt beträgt der Anteil der Komponente C) 0 bis 20 Gew.-%, besonders bevorzugt 0 bis 15 Gew.-%, bezogen auf das Gesamtgewicht der Komponenten A) bis I).

Bevorzugt beträgt der Anteil der Komponente D) 0 bis 20 Gew.-%, besonders bevorzugt 0 bis 15 Gew.-%, bezogen auf das Gesamtgewicht der Komponenten A) bis I).

Bevorzugt beträgt der Anteil der Komponente E) 0 bis 100 meq/kg, besonders bevorzugt 0 bis 50 meq/kg, bezogen auf das Gesamtgewicht der zur Amidbildung eingesetzten Komponenten abzüglich des Gewichts des bei der Amidbildung gebildeten Wassers.

Bevorzugt beträgt der Anteil der Komponente F) 0 bis 100 meq/kg, besonders bevorzugt 0 bis 50 meq/kg, bezogen auf das Gesamtgewicht der zur Amidbildung eingesetzten Komponenten abzüglich des Gewichts des bei der Amidbildung gebildeten Wassers.

Bevorzugt beträgt der Anteil der Komponente G) 0 bis 20 Gew.-%, besonders bevorzugt 0 bis 15 Gew.-%, bezogen auf das Gesamtgewicht der Komponenten A) bis I).

Bevorzugt beträgt der Anteil der Komponente H) 0 bis 20 Gew.-%, besonders bevorzugt 0 bis 15 Gew.-%, bezogen auf das Gesamtgewicht der Komponenten A) bis I).

Bevorzugt beträgt der Anteil der Komponente I) 0 bis 10 Gew.-%, besonders bevorzugt 0 bis 5 Gew.-%, bezogen auf das Gesamtgewicht der Komponenten A) bis I).

Der Begriff "aromatische Diamine" bezeichnet im Rahmen der Erfindung allgemein Verbindungen, die wenigstens eine aromatische Gruppe und wenigstens eine Aminogruppe aufweisen. Dabei muss die Aminogruppe nicht direkt an die aromatische Gruppe gebunden sein. Geeignete aromatische Diamine C) sind ausgewählt unter Bis-(4-aminophenyl)-methan, 3-Methylbenzidin, 2,2-Bis-(4-aminophenyl)-propan, 1,1-Bis-(4-aminophenyl)-cyclohexan, 1,2-Diaminobenzol, 1,4-Diaminobenzol, 1,4-Diaminonaphthalin, 1,5-Diaminonaphthalin, 1,3-Diaminotoluol(e), m-Xylylendiamin, N,N'-Dimethyl-4,4'-biphenyl-diamin, Bis-(4-methyl-aminophenyl)-methan, 2,2-Bis-(4-methylaminophenyl)-propan oder Gemischen davon.

Die aliphatischen oder cycloaliphatischen Dicarbonsäuren C) sind vorzugsweise ausgewählt unter Oxalsäure, Malonsäure, Bernsteinsäure, Glutarsäure, Adipinsäure, Pimelinsäure, Korksäure, Azelainsäure, Sebacinsäure, Undecan-a,co-dicarbonsäure, Dodecan-a,co-dicarbonsäure, Maleinsäure, Fumarsäure oder Itaconsäure, cis- und trans-Cyclohexan-1,2-dicarbonsäure, cis- und trans-Cyclohexan-1,3-dicarbonsäure, cis- und trans-Cyclohexan-1,4-dicarbonsäure, cis- und trans-Cyclopentan-1,2-dicarbonsäure, cis- und trans-Cyclopentan-1,3-dicarbonsäure und Mischungen davon.

Die in Schritt a) bereitgestellte Eduktzusammensetzung kann wenigstens eine Monocarbonsäure E) enthalten. Die Monocarbonsäuren E) dienen dabei der Endverkappung der erfindungsgemäß hergestellten Polyamide. Geeignet sind grundsätzlich alle Monocarbonsäuren, die befähigt sind, unter den Reaktionsbedingungen der Polyamidkondensation mit zumindest einem Teil der zur Verfügung stehenden Aminogruppen zu reagieren. Geeignete Monocarbonsäuren E) sind aliphatische Monocarbonsäuren, alicyclische Monocarbonsäuren und aromatische Monocarbonsäuren. Dazu zählen Essigsäure, Propionsäure, n-, iso- oder tert.-Buttersäure, Valeriansäure, Trimethylessigsäure, Capronsäure, Önanthsäure, Caprylsäure, Pelargonsäure, Caprinsäure, Undecansäure, Laurinsäure, Tridecansäure, Myristinsäure, Palmitinsäure, Stearinsäure, Pivalinsäure, Cyclohexancarbonsäure, Benzoesäure, Methylbenzoesäuren, $\alpha$-Naphthalincarbonsäure, $\beta$-Naphthalincarbonsäure, Phenylessigsäure, Ölsäure, Ricinolsäure, Linolsäure, Linolensäure, Erucasäure, Fettsäuren aus Soja, Leinsamen, Ricinus und Sonnenblume, Acrylsäure, Methacrylsäure, Versatic®-Säuren, Koch®-Säuren und Mischungen davon.

Werden als Monocarbonsäuren E) ungesättigte Carbonsäuren oder deren Derivate eingesetzt, kann es sinnvoll sein, in Gegenwart von handelsüblichen Polymerisationsinhibitoren zu arbeiten.

Besonders bevorzugt ist die Monocarbonsäure E) ausgewählt unter Essigsäure, Propionsäure, Benzoesäure und Mischungen davon.

Die in Schritt a) bereitgestellte Eduktzusammensetzung kann wenigstens ein Monoamin F) enthalten. Die Monoamine F) dienen dabei der Endverkappung der erfindungsgemäß hergestellten Polyamide. Geeignet sind grundsätzlich alle Monoamine, die befähigt sind, unter den Reaktionsbedingungen der Polyamidkondensation mit zumindest einem Teil der zur Verfügung stehenden Carbonsäuregruppen zu reagieren. Geeignete Monoamine F) sind aliphatische Monoamine, alicyclische Monoamine und aromatische Monoamine. Dazu zählen Methylamin, Ethylamin, Butylamin, Propylamin, Hexylamin, Heptylamin, Octylamin, Decylamin, Stearylamin, Dimethylamin, Diethylamin, Dipropylamin, Dibutylamin, Cyclohexylamin, Dicyclohexylamin, Anilin, Toluidin, Diphenylamin, Naphthylamin und Mischungen davon.

Geeignete Lactame G) sind $\epsilon$-Caprolactam, 2-Piperidon ($\delta$-Valerolatam), 2-Pyrrolidon ($\gamma$-Butyrolactam), Capryllactam, Önanthlactam, Lauryllactam und Mischungen davon.

Geeignete $\omega$-Aminosäuren H) sind 6-Aminocapronsäure, 7-Aminoheptansäure, 11-Aminoundecansäure, 12-Aminododecansäure und Mischungen davon. Bevorzugt enthält die in Schritt a) bereitgestellte Eduktzusammensetzung keine Lactame H).

Geeignete von A) bis H) verschiedene, damit cokondensierbare Verbindungen I) sind wenigstens dreiwertige Amine, Carbonsäuren, Diaminocarbonsäuren, etc.

Geeignete dreiwertige Amine I) sind N'-(6-aminohexyl)hexan-1,6-diamin, N'-(12-amino-dodecyl)dodecan-1,12-diamin, N'-(6-aminohexyl)dodecan-1,12-diamin, N'-[3-(aminomethyl)-3,5,5-trimethyl-cyclohexyl]hexan-1,6-diamin, N'-[3-(aminomethyl)-3,5,5-trimethyl-cyclohexyl]dodecan-1,12-diamin, N'-[(5-amino-1,3,3-trimethyl-cyclohexyl)methyl]-hexan-1,6-diamin, N'-[(5-amino-1,3,3-trimethyl-cyclohexyl)methyl]dodecan-1,12-diamin, 3-[[[3-(aminomethyl)-3,5,5-trimethyl-cyclohexyl]amino]methyl]-3,5,5-trimethyl-cyclohexanamin, 3-[[(5-amino-1,3,3-trimethyl-cyclohexyl)methylamino]methyl]-3,5,5-trimethyl-cyclohexanamin, 3-(Aminomethyl)-N-[3-(aminomethyl)-3,5,5-trimethyl-cyclohexyl]-3,5,5-trimethyl-cyclohexanamin. Bevorzugt enthält die in Schritt a) bereitgestellte Eduktzusammensetzung keine dreiwertigen Amine I).

Geeignete Verbindungen I) sind weiterhin 4-[(Z)-N-(6-Aminohexyl)-C-hydroxy-carbonimidoyl]benzoesäure, 3-[(Z)-N-(6-Aminohexyl)-C-hydroxy-carbonimidoyl]benzoesäure, (6Z)-6-(6-Aminohexylimino)-6-hydroxy-hexancarbonsäure, 4-[(Z)-N-[(5-Amino-1,3,3-trimethyl-cyclohexyl)methyl]-C-hydroxy-carbonimidoyl]benzoesäure, 3-[(Z)-N-[(5-Amino-1,3,3-trimethyl-cyclohexyl)methyl]-C-hydroxy-carbonimidoyl]benzoesäure, 4-[(Z)-N-[3-(Aminomethyl)-3,5,5-trimethyl-cyclohexyl]-C-hydroxy-carbonimidoyl]benzoesäure, 3-[(Z)-N-[3-(Aminomethyl)-3,5,5-trimethyl-cyclohexyl]-C-hydroxy-carbonimidoyl]benzoesäure und Mischungen davon.

Das nach dem erfindungsgemäßen Verfahren erhaltene teilaromatische Polyamid weist vorzugsweise ein zahlenmittleres Molekulargewicht $M_n$ in einem Bereich von 13000 bis 25000 g/mol, besonders bevorzugt von 15000 bis 20000 g/mol, auf.

Das nach dem erfindungsgemäßen Verfahren erhaltene teilaromatische Polyamid weist vorzugsweise ein gewichtsmittleres Molekulargewicht $M_w$ in einem Bereich von 20000 bis 140000 g/mol, auf.

Die Angaben des zahlenmittleren Molekulargewichts $M_n$ und des gewichtsmittleren Molekulargewichts $M_w$ im Rahmen dieser Erfindung beziehen sich auf eine Bestimmung mittels Gelpermeationschromatographie (GPC). Zur Kalibrierung wird PMMA als Polymerstandard mit einer niedrigen Polydispersität eingesetzt.

Das nach dem erfindungsgemäßen Verfahren erhaltene teilaromatische Polyamid weist vorzugsweise eine Polydispersität PD (= $M_w/M_n$) von höchstens 3, besonders bevorzugt von höchstens 2,5, auf.

Das nach dem erfindungsgemäßen Verfahren erhaltene teilaromatische Polyamid weist vorzugsweise einen Quotienten von zahlenmittlerem Molekulargewicht $M_n$ zu PD ($M_n$/PD)von wenigstens 7000, bevorzugt von wenigstens 7500, auf.

Das nach dem erfindungsgemäßen Verfahren erhaltene teilaromatische Polyamid weist vorzugsweise einen Aminendgruppengehalt (AEG) von 300 bis 500 meq/kg auf.

Das nach dem erfindungsgemäßen Verfahren erhaltene teilaromatische Polyamid weist vorzugsweise einen Carbonsäureendgruppengehalt (CEG) von höchstens 50 meq/kg auf.

Die relative Viskosität (RV) wird im Rahmen dieser Erfindung bei 25 °C als Lösung in 96 Gew.-% $H_2SO_4$ mit

einer Konzentration von 1,0 g Polyamid in 100 ml Schwefelsäure bestimmt. Die Bestimmung der relativen Viskosität folgt dabei der EN ISO 307. Das nach dem erfindungsgemäßen Verfahren erhaltene teilaromatische Polyamid weist vorzugsweise eine relative Viskosität von 1,4 bis 2,4, besonders bevorzugt 1,5 bis 2,1, auf.

Zur Herstellung der teilaromatischen Polyamide wird die in Schritt a) bereitgestellte Eduktzusammensetzung in wenigstens eine Polymerisationszone eingespeist und einer Polymerisation bei erhöhter Temperatur und, zumindest zu Beginn der Polymerisation, bei erhöhtem Druck unterzogen (= Schritt b).

Die erfindungsgemäßen teilaromatischen Polyamide können grundsätzlich nach üblichen, dem Fachmann bekannten Verfahren hergestellt werden. Die Herstellung von teilaromatischen Polyamiden beginnt in der Regel mit der Bildung einer wässrigen Salzlösung aus wenigstens einem Diamin und wenigstens einer Dicarbonsäure. An die Bildung der Salzlösung schließt sich dann eine Oligomerisierung in der flüssigen wässrigen Phase an. Für den angestrebten Molekulargewichtsaufbau muss dann im Verlauf des weiteren Verfahrens Wasser entfernt und die Reaktionstemperatur erhöht werden. Zum weiteren Molekulargewichtsaufbau stehen prinzipiell zwei alternative Routen zur Verfügung. In der ersten Variante wird das gebildete Oligomer durch Entwässerung in die feste Phase überführt und einer sogenannten Festphasenpolymerisation (solid state polymerization, SSP) unterzogen. In der zweiten Variante erfolgt unter kontrollierter Wasserabtrennung und Temperaturerhöhung eine Überführung der wässrigen Lösung in die Schmelze zur weiteren Polykondensation. Zum weiteren Molekulargewichtsaufbau kann sich dann, soweit erforderlich, noch eine Nachpolymerisation, z. B. in einem Extruder, anschließen.

In der Folge sollen einige der möglichen Verfahren beispielhaft aufgeführt werden, wobei der Offenbarungsgehalt dieser Dokumente hinsichtlich der Herstellung der teilaromatischen Copolyamide vollständig in den Offenbarungsgehalt der vorliegenden Anmeldung eingeschlossen wird.

Ein geeignetes Verfahren ist z. B. in der EP 0 693 515 A1 beschrieben. Dabei erfolgt die Herstellung von Vorkondensaten teilaromatischer Polyamide in einem mehrstufigen Chargenprozess, der die folgenden Stufen a) bis e) umfasst:

a) eine Salzbildungsphase zur Herstellung von Salz(en) aus Diamin(en) und Dicarbonsäure(n) und gegebenenfalls partielle Vorreaktion zu niedermolekularen Oligoamiden bei Temperaturen zwischen 120 °C und 220 °C und Drücken von bis zu 23 bar,

b) gegebenenfalls die Überführung der Lösung aus Stufe a) in ein zweites Reaktionsgefäß bzw. einen Rührautoklaven unter den am Ende ihrer Herstellung herrschenden Bedingungen,

c) die Reaktionsphase, während der die Umsetzung zu den Vorkondensaten vorangetrieben wird, durch Aufheizen des Reaktorinhaltes auf eine vorgegebene Temperatur und kontrolliertes Einstellen des Wasserdampfpartialdruckes auf einen vorgegebenen Wert, der durch kontrolliertes Ablassen von Wasserdampf oder gegebenenfalls kontrollierte Einspeisung von Wasserdampf aus einem mit dem Autoklaven verbundenen Wasserdampferzeuger aufrechterhalten wird,

d) eine für mindestens 10 Minuten aufrechtzuerhaltende stationäre Phase, bei der die Temperatur des Reaktorinhalts und der Wasserdampfpartialdruck jeweils auf die Werte eingestellt werden, welche für die Überführung der Vorkondensate in die nachfolgende Prozessstufe vorgesehen sind,
wobei im Falle von Vorkondensaten teilkristalliner (Co-)Polyamide mit einem Schmelzpunkt von mehr als 280 °C die Temperatur des Reaktorinhalts während der Phasen c) und d) 265 °C nicht überschreiten darf und für die besagten teilkristallinen (Co-)Polyamide während der Phasen c) und d) bestimmte genauer definierte Randbedingungen in Bezug auf die Abhängigkeit des mindestens anzuwendenden Wasserdampfpartialdruckes $P_{H2O}$ (minimum) von der Temperatur des Reaktorinhalts und der Amidgruppenkonzentration des Polymeren einzuhalten sind, und

e) eine Austragsphase, während der die Vorkondensate entweder direkt im schmelzflüssigen Zustand oder nach Durchlaufen des festen Zustandes und gegebenenfalls weiterer Verfahrensstufen einer Endreaktionsvorrichtung zugeführt werden können.

Die EP 0976774 A2 beschreibt ein Verfahren zur Herstellung von Polyamiden, umfassend die folgenden Schritte:

i) Polykondensation einer Dicarbonsäurekomponente, die Terephthalsäure enthält, und einer Diaminkomponente mit einem Gehalt an 1,9-Nonandiamin und/oder 2-Methyl-1,8-octandiamin von 60 bis 100 Mol% in Gegenwart 15 bis 35 Gew.-% Wasser bei einer Reaktionstemperatur von 250 bis 280 °C und einem Reaktionsdruck, der folgende Gleichung erfüllt:

$$P_0 \geq P \geq 0,7\, P_0$$

wobei $P_0$ für den Sättigungsdampfdruck von Wasser bei der Reaktionstemperatur steht,

unter Erhalt eines primären Polykondensats,

(ii) Austragen des primären Polykondensats aus Schritt i) in einer atmosphärischen Umgebung mit demselben Temperaturbereich und bei demselben Wassergehalt wie in Schritt i),

(iii) Molekulargewichtsaufbau, indem man den Austrag aus Schritt ii) einer Festphasenpolymerisation oder einer Schmelzepolymerisation unterzieht.

Die EP 0 129 195 A1 beschreibt ein Verfahren zur kontinuierlichen Herstellung von Polyamiden, bei dem man in einer Verdampferzone eine wässrige Lösung von Salzen aus Dicarbonsäuren und Diaminen unter erhöhtem Druck unter gleichzeitiger Verdampfung von Wasser und Bildung eines Präpolymeren auf eine Temperatur von 250 bis 300 °C erhitzt, Präpolymer und Dampf kontinuierlich trennt, die Dämpfe rektifiziert und mitgeführte Diamine zurückleitet, das Präpolymere in eine Polykondensationszone leitet und unter einem Überdruck von 1 bis 10 bar bei einer Temperatur von 250 bis 300 °C kondensiert, wobei man die wässrige Salzlösung unter einem Überdruck von 1 bis 10 bar innerhalb einer Verweilzeit von höchstens 60 Sekunden erhitzt mit der Maßgabe, dass bei Austritt aus der Verdampferzone der Umsetzungsgrad mindestens 93 % beträgt und der Wassergehalt des Präpolymeren höchstens 7 Gew.-% beträgt.

Die EP 0 129 196 A1 beschreibt ein zur EP 0 129 195 A1 vergleichbares Verfahren, bei dem man die wässrige Salzlösung im ersten Drittel einer rohrförmigen, mit Einbauten versehenen Vorkondensationszone unter einem Überdruck von 1 bis 10 bar bis zu einem Umsetzungsgrad von mindestens 93 % kondensiert und in den restlichen zwei Dritteln der Vorkondensationszone das Präpolymere und die Dampfphase intensiv miteinander in Berührung bringt.

Die WO 02/28941 beschreibt ein kontinuierliches Verfahren zur hydrolytischen Polymerisation von Polyamiden, umfassend:

a) Polymerisation einer wässrigen Salzlösung aus Disäuren und Diaminen unter Temperatur- und Druckbedingungen, die geeignet sind, ein mehrphasiges Reaktionsgemisch zu bilden, wobei die Reaktionszeit jedoch so gewählt wird, dass eine Phasentrennung vermieden wird,

b) Wärmeeintrag in das Reaktionsgemisch bei gleichzeitiger Druckverringerung, um Wasser zu entfernen, ohne dass es zu einer Feststoffbildung kommt,

c) weitere Polymerisation des entwässerten Reaktionsgemischs bis zum angestrebten Molekulargewicht.

Die US 4,019,866 beschreibt ein Verfahren und eine Vorrichtung zur kontinuierlichen Polyamidherstellung. Nach dem Verfahren werden die Polyamid bildenden Reaktanten kontinuierlich in eine Reaktionszone eingepumpt, die so ausgelegt ist, dass ein rasches Erhitzen und gleichmäßiges Durchmischen ermöglicht sind. Die Reaktanten werden erhitzt und innerhalb der Reaktionszone für eine vorher bestimmte Haltezeit bei einer erhöhten Temperatur und einem erhöhten Druck gleichmäßig vermischt und so ein Dampf und ein Präpolymer gebildet. Der gebildete Dampf wird kontinuierlich von den Präpolymeren abgetrennt und die Präpolymere aus der Reaktionszone abgezogen. Die eingesetzte Vorrichtung ist kolonnenartig ausgestaltet und umfasst eine Rektifizierzone, eine erste und eine zweite Reaktionszone. In der ersten Reaktionszone wird eine Polyamid-bildende Salzlösung teilweise verdampft und teilweise umgesetzt und in der zweiten Reaktionszone die Reaktion bei einem niedrigeren Druck als in der ersten Reaktionszone fortgeführt. Der Dampf aus der ersten Reaktionszone wird durch die Rektifizierzone abgelassen.

Die EP 0 123 377 A2 beschreibt ein Kondensationsverfahren, das unter Anderem zur Herstellung von Polyamiden dient. Danach wird eine Salzlösung oder ein Präpolymer in einem Verdampfungsreaktor bei einem relativen Druck (Überdruck) von 0 bis 27,6 bar entspannt, Die Verweilzeit im Verdampfungsreaktor beträgt 0,1 bis 20 Sekunden. In einer speziellen Ausführung erfolgt zunächst eine Präpolymerisation bei einer Temperatur von 191 bis 232 °C und einem Lösungsmittelgehalt (Wassergehalt) von weniger als 25 Gew.-%: Die resultierende Salzlösung wird dann auf einen relativen Druck von 103,4 bis 206,8 bar gebracht, erst dann wird die Temperatur auf einen Wert oberhalb der Schmelztemperatur erhöht und die Lösung entspannt. Das Polymer kann in einen Doppelschneckenextruder eingespeist und dort einer Polymerisation bei einer Verweilzeit von etwa 45 Sekunden bis 7 Minuten unterzogen werden.

Die DE 4329676 A1 beschreibt ein Verfahren zur kontinuierlichen Polykondensation von hochmolekularen, insbesondere amorphen, teilaromatischen Copolyamiden, wobei zunächst aus einer wässrigen Reaktionsmischung unter Erwärmen und bei mindestens 15 bar Druck ein Vorkondensat hergestellt wird, nachfolgend unter Erhöhung von Temperatur und Druck ein Präpolymer und schließlich durch Kondensation in einem Entgasungsextruder das Copolyamid hergestellt wird. Dabei wird bereits in der Vorkondensationsstufe der Wassergehalt verringert und beträgt am Ende der Vorkondensation etwa 5 bis 40 Gew.-%. Die Herstellung des Präpolymers erfolgt dann bei 220 bis 350 °C und einem Druck von mindestens 20 bar. Die Nachpolymerisation wird dann in einem Doppelschneckenextruder mit Entgasungszonen durchgeführt.

Bevorzugt umfasst die Polymerisation in Schritt b), dass man die in Schritt a) bereitgestellte Eduktzusammensetzung in eine erste Polymerisationszone (Oligomerisierungszone) einspeist und einer Oligomerisierung bei einer Temperatur von 150 bis 290 °C und einem absoluten Druck von wenigstens 5 bar unterzieht. Bevorzugt liegt die Temperatur in der ersten Polymerisationszone in einem Bereich von 150 bis 250 °C.

In einer ersten geeigneten Variante wird aus der ersten Polymerisationszone bereits von Beginn der Polymerisation an eine wasserhaltige Gasphase entnommen. Beim Einsatz von entsprechend niedrig siedenden Diaminen, speziell von Hexamethylendiamin, enthält die so abgetrennte Gasphase neben Wasserdampf Anteile der eingesetzten Diaminkomponente B).

In einer zweiten Variante erfolgt die frühe Phase der Oligomerenbildung ohne Stoffaustausch mit der Umgebung erfolgt, d. h. insbesondere ohne die sofortige Entfernung einer wasserhaltigen Gasphase. Dann wird ein Anteil der Diamine B) aus der Eduktzusammensetzung bereits einer Kondensation unter Amidbildung unterworfen, bevor eine wasserhaltige Gasphase aus der ersten Polymerisationszone entnommen wird. Nach dieser zweiten Variante ist der Gehalt der Diaminkomponente B) in der so abgetrennten Gasphase geringer als nach der ersten Variante.

Vorzugsweise wird das Reaktionsgemisch aus der ersten Reaktionszone nach Beendigung der Oligomerenbildung einer Entspannung unter Erhalt einer wasserhaltigen Gasphase und einer die Polyamid-Oligomeren enthaltenden Phase unterzogen. Auch die bei dieser Entspannung erhaltene wasserhaltige Gasphase kann einen Teil der Diaminkomponente B) enthalten.

Der weitere Molekulargewichtsaufbau kann dann nach üblichen Verfahren, wie zuvor beschrieben, erfolgen.

Zur Herstellung der erfindungsgemäßen Polyamide kann wenigstens ein Katalysator eingesetzt werden. Geeignete Katalysatoren sind vorzugsweise ausgewählt unter anorganischen und/oder organischen Phosphor-, Zinn- oder Bleiverbindungen und deren Mischungen.

Als Katalysatoren geeignete Zinnverbindungen sind z. B. Zinn(II)-oxid, Zinn(II)-hydroxid, Zinn(II)-Salze ein- oder mehrwertiger Carbonsäuren, z. B. Zinn(II)-dibenzoat, Zinn(II)-di(2-ethylhexanoat), Zinn(II)-oxalat, Dibutylzinnoxid, Butylzinnsäure($C_4H_9$-SnOOH), Dibutyl-Zinn-dilaurat, etc. Geeignete Bleiverbindungen sind z. B. Blei(II)-oxid, Blei(II)-hydroxid, Blei(II)-acetat, basisches Blei(II)-acetat, Blei(II)-carbonat, etc.

Bevorzugte Katalysatoren sind Phosphorverbindungen wie Phosphorsäure, phosphorige Säure, hypophosphorige Säure, Phenylphosphonsäure, Phenylphosphinsäure und/oder deren Salze mit 1- bis 3-wertigen Kationen wie z. B. Na, K, Mg, Ca, Zn oder Al und/oder deren Ester wie z. B. Triphenylphosphat, Triphenylphosphit oder Tris-(nonylphenyl)-phosphit. Besonders bevorzugt als Katalysator sind die hypophosphorige Säure und deren Salze wie Natriumhypophosphit.

Bevorzugt werden die Katalysatoren in einer Menge von 0,005 bis 2,5 Gew.-Teilen, bezogen auf das Gesamtgewicht der Komponenten A) bis I) eingesetzt.

Besonders bevorzugt werden die hypophosphorige Säure und/oder ein Salz in einer Menge von 0,01 bis 1, 5 Gew.-Teilen, besonders bevorzugt von 0,05 bis 1 Gew.-Teilen, bezogen die Gesamtmenge der Komponenten A) bis I), eingesetzt.

Zur Regelung der Molmasse kann wenigstens ein Kettenregler eingesetzt werden, der vorzugsweise ausgewählt ist unter Monocarbonsäuren und Monoaminen. Bevorzugt ist der Kettenregler ausgewählt unter Essigsäure, Propionsäure, Buttersäure, Valeriansäure, Capronsäure, Laurinsäure, Stearinsäure, 2-Ethylhexansäure, Cyclohexansäure, Benzoesäure, 3-(3,5-di-tert-butyl-4-hydroxyphenyl)propansäure, 3,5-di-tert-butyl-4-hydroxybenzoesäure, 3-(3-tert-butyl-4-hydroxy-5-methylphenyl)propansäure, 2-(3,5-di-tert-butyl-4-hydroxybenzylthio)essigsäure, 3,3-bis(3-tert-butyl-4-hydroxyphenyl)butansäure, Butylamin, Pentylamin, Hexylamin, 2-Ethylhexylamin, n-Octylamin, n-Dodecylamin, n-Tetradecylamin, n-Hexadecylamin, Stearylamin, Cyclohexylamin, 3-(Cyclohexylamino)propylamin, Methylcyclohexylamin, Dimethylcyclohexylamin, Benzylamin, 2-Phenylethylamin, 2,2,6,6-tetramethylpiperidin-4-amin, 1,2,2,6,6-Pentamethylpiperidin-4-amin, 4-Amino-2,6-di-tert-butylphenol und Mischungen davon. Es können auch andere monofunktionelle Verbindungen als Regler eingesetzt werden, die mit einer Amino- oder Säuregruppe reagieren können, wie Anhydride, Isocyanate, Säurehalogenide oder Ester. Der Kettenregler kann dem Reaktionsgemisch vor oder zu Beginn der Oligomerisierung und/oder dem Präpolymer vor der Nachpolymerisation zugesetzt werden. Die übliche Einsatzmenge der Kettenregler liegt in einem Bereich von 5 bis 200 mmol pro kg Polymer, vorzugsweise 10 bis 100 mmol pro kg Polymer.

In einer speziellen Ausführungsform wird zur Herstellung der erfindungsgemäßen Copolyamide eine wässrige Zusammensetzung aus Terephthalsäure a), Isophthalsäure b), Hexamethylendiamin c) und wenigstens einem cyclischen Diamin d) bereitgestellt und einer Salzbildung unterzogen. Gewünschtenfalls können dieser Lösung weitere Komponenten, wie Katalysatoren, Kettenregler und davon verschiedene Additive zugesetzt werden. Geeignete Additive werden im Folgenden bei den Polyamid-Formmassen ausführlich beschrieben. Zu den Additiven, die auch bereits bei der Herstellung der erfindungsgemäßen Polyamide zugesetzt werden können, zählen z. B. Antioxidantien, Lichtschutzmittel, übliche Verarbeitungshilfsmittel, Nukleierungsmittel und Kristallisationsbeschleuniger. Diese können den erfindungsgemäßen Polyamiden im Allgemeinen in jeder Stufe der Herstellung zugesetzt werden. Es ist auch möglich, bereits bei der Herstellung der erfindungsgemäßen Polyamide Füll- und Verstärkungsstoffe einzusetzen. Füll- und Verstärkungsstoffe werden vorzugsweise vor und/oder während der abschließenden Nachpolymerisation zugegeben. So können diese z. B. den erfindungsgemäßen Copolyamiden bei der Nachpolymerisation in einem Extruder oder Kneter zugegeben werden. In diesem Fall ist es vorteilhaft, wenn der Extruder geeignete Mischelemente, wie Knetblöcke, aufweist.

Diese zur Herstellung der erfindungsgemäßen teilaromatischen Polyamide bereitgestellte Zusammensetzung weist vorzugsweise einen Wassergehalt von 5 bis 50 Gew.-%, besonders bevorzugt von 10 bis 25 Gew.-%, bezogen auf das Gesamtgewicht der Lösung, auf.

Die Herstellung der wässrigen Zusammensetzung kann in einer üblichen Reaktionsvorrichtung, z. B. einem Rührkessel, erfolgen. Vorzugsweise erfolgt das Vermischen der Komponenten unter Erwärmung. Bevorzugt erfolgt die Herstellung der wässrigen Zusammensetzung unter Bedingungen, bei denen im Wesentlichen noch keine Oligomerisierung erfolgt. Bevorzugt liegt die Temperatur bei der Herstellung der wässrigen Zusammensetzung in Schritt a) in einem Bereich von 80 bis 170 °C, besonders bevorzugt von 100 bis 165 °C. Bevorzugt erfolgt die Herstellung der wässrigen Zusammensetzung bei Umgebungsdruck oder unter erhöhtem Druck. Bevorzugt liegt der Druck in einem Bereich von 0,9 bis 50 bar, besonders bevorzugt von 1 bis 10 bar. In einer speziellen Ausführung erfolgt die Herstellung der wässrigen Zusammensetzung beim Eigendruck der Reaktionsmischung. Die Herstellung der wässrigen Zusammensetzung kann in einer Inertgasatmosphäre erfolgen. Geeignete Inertgase sind z. B. Stickstoff, Helium oder Argon. In vielen Fällen ist eine vollständige Inertisierung nicht erforderlich, sondern bereits ein Spülen der Reaktionsvorrichtung mit einem Inertgas vor der Erwärmung der Komponenten ausreichend. In einer geeigneten Vorgehensweise zur Herstellung der wässrigen Zusammensetzung, wird die Diamin-Komponente in wenigstens einem Teil des Wassers gelöst in der Reaktionsvorrichtung vorgelegt. Anschließend werden die übrigen Komponenten, vorzugsweise unter Rühren, zugegeben und der Wassergehalt auf die gewünschte Menge eingestellt. Die Reaktionsmischung wird unter Rühren erwärmt, bis eine klare homogene Lösung entstanden ist. Die so erhaltene wässrige Zusammensetzung wird vorzugsweise im Wesentlichen bei der Herstellungstemperatur, d. h. ohne eine Zwischenkühlung, zur Oligomerisierung eingesetzt.

Die Oligomerisierung unter Bildung von Präpolymeren und die Nachpolymerisation zum Molekulargewichtsaufbau kann nach üblichen, dem Fachmann bekannten Verfahren erfolgen. Einige Beispiele für solche Verfahren wurden weiter oben bereits erwähnt.

Die erfindungsgemäßen teilaromatischen Copolyamide können vor ihrer Verarbeitung zu Polyamid-Formmassen einer Formgebung unter Erhalt von Polyamidteilchen unterzogen werden. Bevorzugt wird das Polyamid zuerst zu einem oder mehreren Strängen geformt. Dazu können dem Fachmann bekannte Vorrichtungen verwendet werden, z. B. Extruder, die austragsseitig z. B. Lochplatten, Düsen oder Düsenplatten aufweisen. Bevorzugt wird das teilaromatische Polyamid in fließfähigem Zustand zu Strängen geformt und als fließfähiges strangförmiges Reaktionsprodukt oder nach Abkühlung einer Granulierung unterzogen.

Polyamid-Formmasse

Ein weiterer Gegenstand der Erfindung ist eine Polyamid-Formmasse, die wenigstens ein erfindungsgemäßes teilaromatisches Copolyamid enthält.

Bevorzugt ist eine Polyamid-Formmasse, enthaltend:

A) 25 bis 100 Gew.-% wenigstens eines teilaromatischen Copolyamids, wie zuvor definiert,
B) 0 bis 75 Gew.-% wenigstens eines Füll- und Verstärkungsstoffs,
C) 0 bis 50 Gew.-% wenigstens eines Additivs,

wobei die Komponenten A) bis C) zusammen 100 Gew.-% ergeben.

Der Begriff "Füllstoff und Verstärkungsstoff" (= Komponente B) wird im Rahmen der Erfindung breit verstanden und umfasst partikulare Füllstoffe, Faserstoffe und beliebige Übergangsformen. Partikuläre Füllstoffe können eine weite Bandbreite von Teilchengrößen aufweisen, die von staubförmigen bis grobkörnigen Partikeln reichen. Als Füllmaterial kommen organische oder anorganische Füll- und Verstärkungsstoffe in Frage. Beispielsweise können anorganische Füllstoffe, wie Kaolin, Kreide, Wollastonit, Talkum, Calciumcarbonat, Silikate, Titandioxid, Zinkoxid, Graphit, Glaspartikel, z. B. Glaskugeln, nanoskalige Füllstoffe, wie Kohlenstoff-Nanoröhren (carbon nanotubes), carbon black, nanoskalige Schichtsilikate, nanoskaliges Aluminiumoxid ($Al_2O_3$), nanoskaliges Titandioxid ($TiO_2$), Graphen, dauerhaft magnetische bzw. magnetisierbare Metallverbindungen und/oder Legierungen, Schichtsilikate und nanoskaliges Siliciumdioxid ($SiO_2$), eingesetzt werden. Die Füllstoffe können auch oberflächenbehandelt sein.

Als Schichtsilikate können in den erfindungsgemäßen Formmassen z. B. Kaoline, Serpentine, Talkum, Glimmer, Vermiculite, Illite, Smectite, Montmorillonit, Hectorit, Doppelhydroxyde oder Gemische davon eingesetzt werden. Die Schichtsilikate können oberflächenbehandelt oder unbehandelt sein.

Weiterhin können ein oder mehrere Faserstoffe zum Einsatz kommen. Diese sind vorzugsweise ausgewählt aus bekannten anorganischen Verstärkungsfasern, wie Borfasern, Glasfasern, Kohlenstofffasern, Kieselsäurefasern, Keramikfasern und Basaltfasern; organischen Verstärkungsfasern, wie Aramidfasern, Polyesterfasern, Nylonfasern, Polyethylenfasern und Naturfasern, wie Holzfasern, Flachsfasern, Hanffasern und Sisalfasern.

Insbesondere bevorzugt ist der Einsatz von Glasfasern, Kohlenstofffasern, Aramidfasern, Borfasern, Metallfasern oder Kaliumtitanatfasern.

Speziell werden Schnittglasfasern eingesetzt. Insbesondere umfasst die Komponente B) Glas- und/oder Kohlenstofffasern, wobei bevorzugt Kurzfasern eingesetzt werden. Diese weisen vorzugsweise eine Länge im Bereich von 2 bis 50 mm und einen Durchmesser von 5 bis 40 $\mu$m auf. Alternativ können Endlosfasern (Rovings) eingesetzt werden. Geeignet sind Fasern mit kreisförmiger und/oder nicht-kreisförmiger Querschnittsfläche, wobei im letzteren Fall das Abmessungsverhältnis von der Hauptquerschnittsachse zur Nebenquerschnittsachse insbesondere > 2 ist, bevorzugt im Bereich von 2 bis 8 und besonders bevorzugt im Bereich von 3 bis 5 liegt.

In einer speziellen Ausführung umfasst die Komponente B) sogenannte "flache Glasfasern". Diese weisen speziell eine ovale oder elliptische oder eine mit Einschnürung(en) versehene elliptische (sog. "Kokon"-oder "cocoon"-Faser) oder rechteckige oder nahezu rechteckige Querschnittsfläche auf. Dabei werden Glasfasern mit nicht-kreisförmiger Querschnittsfläche und einem Abmessungsverhältnis von der Hauptquerschnittsachse zur Nebenquerschnittsachse von mehr als 2, bevorzugt von 2 bis 8, insbesondere von 3 bis 5, bevorzugt eingesetzt.

Zur Verstärkung der erfindungsgemäßen Formmassen können auch Mischungen von Glasfasern mit kreisförmigem und nicht-kreisförmigem Querschnitt verwendet werden. In einer speziellen Ausführung überwiegt der Anteil an flachen Glasfasern, wie oben definiert, d. h. sie machen mehr als 50 Gew.-% der Gesamtmasse der Fasern aus.

Wenn als Komponente B) Rovings von Glasfasern eingesetzt werden, weisen diese vorzugsweise einen Durchmesser von 10 bis 20 $\mu$m, bevorzugt von 12 bis 18 $\mu$m, auf. Dabei kann der Querschnitt der Glasfasern rund, oval, elliptisch, nahezu rechteckig oder rechteckig sein. Besonders bevorzugt werden sogenannte flache Glasfasern mit einem Verhältnis der Querschnittsachsen von 2 bis 5. Insbesondere werden E-Glasfasern verwendet. Es können aber auch alle anderen Glasfasersorten, wie z. B. A-, C-, D-, M-, S-, R-Glasfasern oder beliebige Mischungen davon oder Mischungen mit E-Glasfasern eingesetzt werden.

Die erfindungsgemäßen Polyamid-Formmassen können durch die bekannten Verfahren zur Herstellung von langfaserverstärktem Stäbchengranulat hergestellt werden, insbesondere durch Pultrusionsverfahren, bei denen der endlose Faserstrang (Roving) mit der Polymerschmelze vollständig durchtränkt und anschließend abgekühlt und geschnitten wird. Das auf diese Art und Weise erhaltene langfaserverstärkte Stäbchengranulat, das bevorzugt eine Granulatlänge von 3 bis 25 mm, insbesondere von 4 bis 12 mm aufweist, kann mit den üblichen Verarbeitungsverfahren, wie z. B. Spritzgießen oder Pressen, zu Formteilen weiterverarbeitet werden.

Die erfindungsgemäße Polyamid-Formmasse enthält bevorzugt 25 bis 75 Gew.-%, besonders bevorzugt 33 bis 60 Gew.-%, mindestens eines Füll- und Verstärkungsstoffs B), bezogen auf das Gesamtgewicht der Polyamid-Formmasse.

Geeignete Additive C) sind Wärmestabilisatoren, Flammschutzmittel, Lichtschutzmittel (UV-Stabilisatoren, UV-Absorber oder UV-Blocker), Gleitmittel, Farbstoffe, Nukleierungsmittel, metallische Pigmente, Metallflitter, metallbeschichtete Partikel, Antistatika, Leitfähigkeitsadditive, Entformungsmittel, optische Aufheller, Entschäumer, etc.

Als Komponente C) enthalten die erfindungsgemäßen Formmassen vorzugsweise 0,01 bis 3 Gew.-%, besonders bevorzugt 0,02 bis 2 Gew.-%, insbesondere 0,1 bis 1,5 Gew.-% mindestens eines Wärmestabilisators.

Bevorzugt sind die Wärmestabilisatoren ausgewählt unter Kupferverbindungen, sekundären aromatischen Aminen, sterisch gehinderten Phenole, Phosphiten, Phosphoniten und Mischungen davon.

Sofern eine Kupferverbindung verwendet wird, beträgt vorzugsweise die Menge an Kupfer 0,003 bis 0,5, insbesondere 0,005 bis 0,3 und besonders bevorzugt 0,01 bis 0,2 Gew.-%, bezogen auf die Summe der Komponenten A) bis C).

Sofern Stabilisatoren auf Basis sekundärer aromatischer Amine verwendet werden, beträgt die Menge an diesen Stabilisatoren vorzugsweise 0,2 bis 2 Gew.-%, besonders bevorzugt von 0,2 bis 1,5 Gew.-%, bezogen auf die Summe der Komponenten A) bis C).

Sofern Stabilisatoren auf Basis sterisch gehinderter Phenole verwendet werden, beträgt die Menge an diesen Stabilisatoren vorzugsweise 0,1 bis 1,5 Gew.-%, besonders bevorzugt von 0,2 bis 1 Gew.-%, bezogen auf die Summe der Komponenten A) bis C).

Sofern Stabilisatoren auf Basis von Phosphiten und/oder Phosphoniten verwendet werden, beträgt die Menge an diesen Stabilisatoren vorzugsweise 0,1 bis 1,5 Gew.-%, besonders bevorzugt von 0,2 bis 1 Gew.-%, bezogen auf die Summe der Komponenten A) bis C).

Verbindungen des ein- oder zweiwertigen Kupfers, z. B. Salze des ein- oder zweiwertigen Kupfers mit anorganischen oder organischen Säuren oder ein- oder zweiwertigen Phenolen, die Oxide des ein- oder zweiwertigen Kupfers oder die Komplexverbindungen von Kupfersalzen mit Ammoniak, Aminen, Amiden, Lactamen, Cyaniden oder Phosphinen, bevorzugt Cu(I)- oder Cu(II)-Salze der Halogenwasserstoffsäuren, der Cyanwasserstoffsäuren oder die Kupfersalze der aliphatischen Carbonsäuren. Besonders bevorzugt sind die einwertigen Kupferverbindungen CuCl, CuBr, Cul, CuCN und $Cu_2O$, sowie die zweiwertigen Kupferverbindungen $CuCl_2$, $CuSO_4$, CuO, Kupfer(II)-acetat oder Kupfer(II)stearat.

Die Kupferverbindungen sind handelsüblich bzw. ihre Herstellung ist dem Fachmann bekannt. Die Kupferverbindung kann als solche oder in Form von Konzentraten eingesetzt werden. Unter Konzentrat ist dabei ein Polymer, vorzugsweise von gleicher chemischer Natur wie die Komponente A), zu verstehen, welches das Kupfersalz in hoher Konzentration enthält. Der Einsatz von Konzentraten ist ein übliches Verfahren und wird besonders häufig dann angewandt, wenn sehr geringe Mengen eines Einsatzstoffes zu dosieren sind. Vorteilhafterweise werden die Kupferverbindungen in Kombination mit weiteren Metallhalogeniden, insbesondere Alkalihalogeniden, wie Nal, KI, NaBr, KBr, eingesetzt, wobei das molare Verhältnis von Metallhalogenid zu Kupferhalogenid 0,5 bis 20, bevorzugt 1 bis 10 und besonders bevorzugt 3 bis 7, beträgt.

Besonders bevorzugte Beispiele für erfindungsgemäß einsetzbare Stabilisatoren auf Basis sekundärer aromatischer Amine sind Addukte aus Phenylendiamin mit Aceton (Naugard A), Addukte aus Phenylendiamin mit Linolensäure, 4,4'-Bis($\alpha,\alpha$-dimethylbenzyl)diphenylamin (Naugard ® 445), N,N'-Dinaphthyl-p-phenylendiamin, N-Phenyl-N'-cyclohexyl-p-phenylendiamin oder Mischungen von zwei oder mehreren davon.

Bevorzugte Beispiele für erfindungsgemäß einsetzbare Stabilisatoren auf Basis sterisch gehinderter Phenole sind N,N'-Hexamethylen-bis-3-(3,5-di-tert-butyl-4-hydroxyphenyl)-propionamid, Bis-(3,3-bis-(4'-hydroxy-3'-tert-butylphenyl)-butansäure)-glykolester, 2,1'-Thioethylbis-(3-(3,5-di.tert-butyl-4-hydroxyphenyl)-propionat, 4,4'-Butyliden-bis-(3-methyl-6-tert.-butylphenol), Triethylenglykol-3-(3-tert-butyl-4-hydroxy-5-methylphenyl)-propionat oder Mischungen von zweien oder mehreren dieser Stabilisatoren.

Bevorzugte Phosphite und Phosphonite sind Triphenylphosphit, Diphenylalkylphosphit, Phenyldialkylphosphit, Tris(nonylphenyl)phosphit, Trilaurylphosphit, Trioctadecylphosphit, Distearylphentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,6-di-tert-butyl-4-methylphenyl)-pentaerythritoldiphosphit, Diisodecyloxypentaerythritoldiphosphit, Bis(2,4-di-tert-butyl-6-methylphenyl)pentaerythritoldiphosphit, Bis(2,4,6-tris-(tert-butylphenyl))pentaerythritoldiphosphit, Tristearylsorbitoltriphosphit, Tetrakis-(2,4-di-tert-butylphenyl)-4,4'-biphenylendiphosphonit, 6-Isooctyloxy-2,4,8,10-tetra-tert-butyl-12H-dibenz-[d,g]-1,3,2-dioxaphosphocin, 6-Fluoro-2,4,8,10-tetra-tert-butyl- 12-methyl-dibenz[d,g]-1,3,2-dioxaphosphocin, Bis(2,4-di-tert-butyl-6-methylphenyl)methylphosphit und Bis(2,4-di-tert-butyl-6-methylphenyl)ethylphosphit. Insbesondere werden bevorzugt Tris[2-tert-butyl-4-thio(2'-methyl-4'-hydroxy-5'-tert-butyl)-phenyl-5-methyl]phenylphosphit und Tris(2,4-di-tert-butylphenyl)phosphit (Hostanox ® PAR24: Handelsprodukt der Firma BASF SE).

Eine bevorzugte Ausführungsform des Wärmestabilisators besteht in der Kombination von organischen Hitzestabilisatoren (insbesondere Hostanox PAR 24 und Irganox 1010), einem Bisphenol A basiertem Epoxid (insbesondere Epikote 1001) und einer Kupferstabilisierung auf Basis von Cul und KI. Eine kommerziell erhältliche Stabilisatormischung, bestehend aus organischen Stabilisatoren und Epoxiden, ist beispielsweise Irgatec NC66 von BASF SE. Insbesondere bevorzugt wird eine Wärmestabilisierung ausschließlich auf Basis von Cul und KI. Neben dem Zusatz von Kupfer oder Kupferverbindungen wird die Verwendung weiterer Übergangsmetallverbindungen, insbesondere Metallsalze oder Metalloxide der Gruppe VB, VIB, VIIB oder VIIIB des Periodensystems ausgeschlossen. Darüber hinaus werden der erfindungsgemäßen Formmasse bevorzugt keine Übergangsmetalle der Gruppe VB, VIB, VIIB oder VIIIB des Periodensystems, wie z. B. Eisen- oder Stahlpulver, zugesetzt.

Die erfindungsgemäßen Formmassen enthalten vorzugsweise 0 bis 30 Gew.-%, besonders bevorzugt 0 bis 20 Gew.-%, bezogen auf das Gesamtgewicht der Komponenten A) bis C), mindestens eines Flammschutzmittels als Additiv C). Wenn die erfindungsgemäßen Formmassen mindestens ein Flammschutzmittel enthalten, so vorzugsweise in einer Menge von 0,01 bis 30 Gew.-%, besonders bevorzugt von 0,1 bis 20 Gew.-%, bezogen auf das Gesamtgewichten der Komponenten A) bis C). Als Flammschutzmittel C) kommen halogenhaltige und halogenfreie Flammschutzmittel und deren Synergisten in Frage (siehe auch Gächter/Müller, 3. Ausgabe 1989 Hanser Verlag, Kapitel 11). Bevorzugte halogenfreie Flammschutzmittel sind roter Phosphor, Phosphinsäure- oder Diphosphinsäuresalze , und/oder stickstoffhaltige Flammschutzmittel wie Melamin, Melamincyanurat, Melaminsulfat, Melaminborat, Melaminoxalat, Melaminphosphat (prim, sec.) oder sec. Melaminpyrophosphat, Neopentylglycolborsäuremelamin, Guanidin und dem Fachmann bekannte Derivate davon, sowie polymeres Melaminphosphat (CAS Nr.: 56386-64-2 bzw. 218768-84-4 sowie EP 1095030), Ammoniumpolyphosphat, Trishydroxyethylisocyanurat (gegebenenfalls auch Ammoniumpolyphosphat in Mischung mit Trishydroxyethylisocyanurat) (EP 584567). Weitere N-haltige oder P-haltige Flammschutzmittel oder als Flammschutzmittel geeignete PN-Kondensate können der DE 10 2004 049 342 entnommen werden, ebenso die hierfür üblichen Synergisten wie Oxide oder Borate. Geeignete halogenhaltige Flammschutzmittel sind z.B. oligomere bromierte Polycarbonate (BC 52 Great Lakes) oder Polypentabrombenzylacrylate mit N größer 4 (FR 1025 Dead sea bromine), Umsetzungsprodukte aus Tetrabrom-bis-phenol-A mit Epoxiden, bromierte oligomere oder polymere Styrole, Dechloran, welche meist mit Antimonoxiden als Synergisten eingesetzt werden (Für Einzelheiten und weitere Flammschutzmittel: siehe DE-A-10 2004 050 025).

Als Antistatika können in den erfindungsgemäßen Formmassen z. B. Ruß und/oder Kohlenstoffnanoröhrchen eingesetzt werden. Die Verwendung von Ruß kann aber auch zur Verbesserung der Schwarzfärbung der Formmasse dienen. Die Formmasse kann jedoch auch frei von metallischen Pigmenten sein.

Formkörper

Des Weiteren betrifft die vorliegende Erfindung Formkörper, die unter Verwendung von den erfindungsgemäßen Copolyamiden bzw. Polyamid-Formmassen hergestellt werden.

Die erfindungsgemäßen teilaromatischen Polyamide eignen sich vorteilhaft für eine Verwendung zur Herstellung von Formteilen für Elektro- und Elektronikbauteilen und für Automobil-Anwendungen im Hochtemperaturbereich.

Eine spezielle Ausführungsform sind Formkörper in Form oder als Teil eines Bauteils für den Automobilbereich, insbesondere ausgewählt unter Zylinderkopfhauben, Motorabdeckungen, Gehäusen für Ladeluftkühler, Ladeluftkühlerklappen, Ansaugrohren, Ansaugkrümmern, Konnektoren, Zahnrädern, Lüfterrädern, Kühlwasserkästen, Gehäusen oder Gehäuseteilen für Wärmetauscher, Kühlmittelkühlern, Ladeluftkühlern, Thermostaten, Wasserpumpen, Heizkörpern, Befestigungsteilen.

Eine weitere spezielle Ausführungsform sind Formkörper als oder als Teil eines elektrischen oder elektronischen passiven oder aktiven Bauteils, einer Leiterplatte, eines Teils einer Leiterplatte, eines Gehäusebestandteils, einer Folie, einer Leitung, insbesondere in Form oder als Teil eines Schalters, eines Steckers, einer Buchse, eines Verteilers, eines Relais, eines Widerstandes, eines Kondensators, einer Spule oder eines Spulenkörpers, einer Lampe, einer Diode, einer LED, eines Transistors, eines Konnektors, eines Reglers, eines integrierten Schaltkreises (IC), eines Prozessors, eines Controllers, eines Speichers und/oder eines Sensors.

Die erfindungsgemäßen teilaromatischen Polyamide eignen sich weiterhin speziell für den Einsatz in Lötprozessen unter bleifreien Bedingungen (lead free soldering), zur Herstellung von Steckverbindern, Mikroschaltern, Mikrotastern und Halbleiterbauteilen, insbesondere Reflektorgehäusen von Leuchtdioden (LED).

Eine spezielle Ausführungsform sind Formkörper als Befestigungselemente elektrischer oder elektronischer Bauteile, wie Abstandshalter, Bolzen, Leisten, Einschubführungen, Schrauben und Muttern.

Insbesondere bevorzugt ist ein Formteil in Form oder als Teil eines Sockels, eines Steckverbinders, eines Steckers oder einer Buchse. Bevorzugt beinhaltet das Formteil Funktionselemente, die eine mechanische Zähigkeit erfordern. Beispiele solcher Funktionselemente sind Filmscharniere, Schnapphaken (Snap-in) und Federzungen.

Im Autoinnenraum ist eine Verwendung für Armaturentafeln, Lenkstockschalter, Sitzteile, Kopfstützen, Mittelkonsolen, Getriebe-Komponenten und Türmodule, im Autoaußenraum für Türgriffe, Außenspiegelkomponenten, Scheibenwischerkomponenten, Scheibenwischerschutzgehäuse, Ziergitter, Dachreling, Schiebedachrahmen, Motorabdeckungen, Zylinderkopfhauben, Ansaugrohre, Scheibenwischer sowie Karosserieaußenteile möglich.

Für den Küchen- und Haushaltsbereich ist der Einsatz fließverbesserter Polyamide zur Herstellung von Komponenten für Küchengeräte, wie z. B. Fritteusen, Bügeleisen, Knöpfe, sowie Anwendungen im Garten-Freizeitbereich, z. B. Komponenten für Bewässerungssysteme oder Gartengeräte und Türgriffe, möglich.

Die folgenden Beispiele dienen der Verdeutlichung der Erfindung, ohne sie in irgendeiner Weise zu beschränken.

BEISPIELE

Die Herstellung der Polyamide erfolgt durch Kondensation in der Schmelze in einem gerührten Druckautoklaven. Hierzu wurden die entsprechenden Mengen an Terephthalsäure, Isophthalsäure und Hexamethylendiamin (HMD, 70%ig in Wasser) eingewogen. Die mit dem HMD zugeführte Wassermenge betrug 15 Gew.-%, und ca. 0,03 Gew.-% Natriumhypophosphit wurden als Katalysator zugegeben. Für einen stöchiometrischen Ansatz (Hexamethylendiamin-Überschuss: 0 meq/kg) werden entsprechend folgende Einsatzmengen verwendet:

164,753 g Terephthalsäure
70,608 g Isophthalsäure
235,198 g Hexamethylendiamin (70%ig in Wasser)
0,13 g Natriumhypophosphit

Bei den Versuchen in der folgenden Tabelle wurde die Menge an Hexamethylendiamin entsprechend dem angegebenen Überschuss oder Unterschuss (negative Werte) entsprechend angepasst.

Die Einsatzstoffe wurden bei Raumtemperatur in den Rührautoklaven eingefüllt, dieser mehrere Male mit Stickstoff gespült und verschlossen. Die Temperatur im Kessel wurde durch Heizung der Kesselwand innerhalb von 35 Minuten auf 260 °C erhöht, wobei der Druck auf 40 bar stieg. Ab einer Temperatur von 150 °C wurde der Reaktionsansatz mit 60 UpM gerührt. Dann wird unter weiterem Aufheizen über ein Entspannungsventil der Druck im Verlauf von 20 Minuten auf 0 bar Überdruck abgesenkt. Gleichzeitig wird die Temperatur im Kessel in dieser Zeitspanne von 260 °C auf 330 °C weiter erhöht. Die im Verlauf der Druckabsenkung aus dem Kessel abgeführte Gasphase wurde über einen Kondensatkühler geleitet, als flüssiges Kondensat aufgefangen, gewogen und der Anteil an flüchtigen Aminbestandteilen durch Säuretitration bestimmt. Das zahlenmittlere Molekulargewicht $M_n$ und die Polydispersität (PD) des entnommenen Polymers wurde mittels GPC (Standard: PMMA) analysiert.

Tabelle 1

| Beispiel-Nr. | HMD-Überschuss [meq/kg] | Basengehalt im Kondensat [meq/kg] | Differenz HMD-Überschuss minus Basengehalt im Kondensat [meq/kg] | $M_n$ | PD | $M_n$/PD | Schmelzeviskosität eta[a) [Pa·s] |
|---|---|---|---|---|---|---|---|
| V1 | -310 | 83 | -393 | 10300 | 2,9 | 3552 | 670 |
| V2 | -210 | 95 | -305 | 10600 | 3,0 | 3533 | - |
| V3 | -110 | 110 | -220 | 13300 | 3,3 | 4030 | - |
| V4 | 190 | 131 | 59 | 27300 | 7,6 | 3592 | 20000 |
| 5 | 490 | 198 | 292 | 17300 | 2,2 | 7864 | 105 |
| 6 | 590 | 230 | 360 | 15800 | 1,8 | 8778 | - |
| V7 | 690 | 252 | 438 | 14200 | 2,1 | 6762 | - |
| V = Vergleichsbeispiel a) 330 °C, 10 rad/s | | | | | | | |

Die erfindungsgemäßen Beispiele 5 und 6 mit einer Differenz von HMD-Überschuss minus Basengehalt im Kondensat von 292 bzw. 360 meq/kg zeichnen sich durch eine geringe Polydispersität sowie ein optimales Verhältnis von $M_n$ zu PD von größer als 7000 aus. Weiterhin zeichnen sich Beispiel 5 durch ein sehr gutes Schmelzefließverhalten aus im Vergleich zu den Beispielen V1 und V4.

**Patentansprüche**

1.  Verfahren zur Herstellung eines teilaromatischen Polyamids, bei dem man

    a) eine Eduktzusammensetzung bereitstellt, die

    A) wenigstens eine unsubstituierte oder substituierte aromatische Dicarbonsäure oder ein Derivat davon und
    B) wenigstens ein aliphatisches oder cycloaliphatisches Diamin,
    oder ein Salz aus wenigstens einer Verbindung A) und wenigstens einer Verbindung B) enthält,

    b) die in Schritt a) bereitgestellte Eduktzusammensetzung in wenigstens eine Polymerisationszone einspeist und einer Polymerisation bei erhöhter Temperatur und, zumindest zu Beginn der Polymerisation, bei erhöhtem Druck unterzieht,
    c) im Verlauf der Polymerisation aus der Polymerisationszone eine wasserhaltige Gasphase entnimmt,
    mit der Maßgabe, dass die Diaminkomponente B) in der Eduktzusammensetzung mit einem stöchiometrischen Überschuss von 300 bis 650 meq/kg eingesetzt wird, wobei für den Fall, dass im Verlauf der Polymerisation ein Teil der Diaminkomponente B) mit der wasserhaltigen Gasphase aus der Polymerisationszone ausgetragen wird, der stöchiometrische Überschuss der Diaminkomponente B) in der Eduktzusammensetzung um den Teil der ausgetragenen Diaminkomponente höher sein muss.

2.  Verfahren nach Anspruch 1, wobei die Differenz zwischen dem stöchiometrischen Überschuss der Diaminkomponente B) in der Eduktzusammensetzung und dem mit der wasserhaltigen Gasphase aus der Polymerisationszone ausgetragenen Teil der Diaminkomponente B) im Bereich von 10 bis 600 meq/kg, bevorzugt 50 bis 500 meq/kg, insbesondere 100 bis 400 meq/kg, liegt.

3. Verfahren nach einem der Ansprüche 1 oder 2, wobei die in Schritt a) bereitgestellte Eduktzusammensetzung zusätzlich zu den Komponenten A) und B) keine weiteren zur Amidbildung befähigten Komponenten enthält.

4. Verfahren nach einem der Ansprüche 1 oder 2, wobei die in Schritt a) bereitgestellte Eduktzusammensetzung wenigstens eine weitere zur Amidbildung befähigte Komponente enthält, die ausgewählt ist unter

C) unsubstituierten oder substituierten aromatischen Diaminen,
D) aliphatischen oder cycloaliphatischen Dicarbonsäuren,
E) Monocarbonsäuren,
F) Monoaminen,
G) Lactamen,
H) $\omega$-Aminosäuren,
I) von A) bis H) verschiedenen, damit cokondensierbaren Verbindungen,
und Mischungen davon.

5. Verfahren nach einem der vorhergehenden Ansprüche, wobei als aromatische Dicarbonsäure A) Terephthalsäure, Isophthalsäure oder ein Gemisch aus Terephthalsäure und Isophthalsäure eingesetzt wird.

6. Verfahren nach einem der vorhergehenden Ansprüche, wobei die in Schritt a) bereitgestellte Eduktzusammensetzung als Komponente A) Terephthalsäure und Isophthalsäure in einem Molmengenverhältnis von 100 : 0 bis 50 : 50, bevorzugt von 90 : 10 bis 60 : 40, enthält.

7. Verfahren nach einem der vorhergehenden Ansprüche, wobei die Diaminkomponente B) zu mindestens 50 Gew.-%, bevorzugt zu mindestens 75 Gew-%, insbesondere zu mindestens 90 Gew.-%, speziell zu mindestens 92 Gew.-%, bezogen auf das Gesamtgewicht der Diaminkomponente B), aus Hexamethylendiamin besteht.

8. Verfahren nach einem der vorhergehenden Ansprüche, wobei es sich bei dem Polyamid um 6.T/6.I handelt.

9. Verfahren nach einem der vorhergehenden Ansprüche, wobei das erhaltene teilaromatische Polyamid ein zahlenmittleres Molekulargewicht $M_n$ in einem Bereich von 13000 bis 25000 g/mol, bevorzugt von 15000 bis 20000 g/mol, aufweist.

10. Verfahren nach einem der vorhergehenden Ansprüche, wobei das erhaltene teilaromatische Polyamid eine Polydispersität PD von höchstens 3,0, bevorzugt von höchstens 2,5 aufweist.

11. Verfahren nach einem der vorhergehenden Ansprüche, wobei das erhaltene teilaromatische Polyamid einen Quotienten von zahlenmittlerem Molekulargewicht $M_n$ zu PD von wenigstens 7000, bevorzugt von wenigstens 7500, aufweist.

12. Teilaromatisches Polyamid, erhältlich durch ein Verfahren, wie in einem der Ansprüche 1 bis 11 definiert.

13. Polyamid-Formmasse, enthaltend wenigstens ein Polyamid, erhältlich durch ein Verfahren, wie in einem der Ansprüche 1 bis 11 definiert, enthaltend:

A) 25 bis 100 Gew.-% wenigstens eines Copolyamids, erhältlich durch ein Verfahren, wie in einem der Ansprüche 1 bis 11 definiert,
B) 0 bis 75 Gew.-% wenigstens eines Füll- und Verstärkungsstoffs,
C) 0 bis 50 Gew.-% wenigstens eines Additivs,
wobei die Komponenten A) bis C) zusammen 100 Gew.-% ergeben.

14. Formkörper, hergestellt aus einer Polyamid-Formmasse nach Anspruch 13, in Form oder als Teil eines Bauteils für den Automobilbereich, insbesondere ausgewählt unter Zylinderkopfhauben, Motorabdeckungen, Gehäusen für Ladeluftkühler, Ladeluftkühlerklappen, Ansaugrohren, Ansaugkrümmern, Konnektoren, Zahnrädern, Lüfterrädern, Kühlwasserkästen, Gehäusen oder Gehäuseteilen für Wärmetauscher, Kühlmittelkühlern, Ladeluftkühlern, Thermostaten, Wasserpumpen, Heizkörpern, Befestigungsteilen, in Form oder als Teil eines elektrischen oder elektronischen Bauteils, insbesondere ausgewählt unter Leiterplatten und Teilen davon, Gehäusebestandteilen, Folien, Leitungen, Schaltern, Verteilern, Relais, Widerständen, Kondensatoren, Spulen, Lampen, Dioden, LEDs, Transistoren, Konnektoren, Reglern, Speicherchips und Sensoren.

**15.** Verwendung eines teilaromatischen Polyamids, erhältlich durch ein Verfahren, wie in einem der Ansprüche 1 bis 11 definiert oder einer Formmasse, wie in Anspruch 13 definiert, zur Herstellung von Elektro- und Elektronikbauteilen und für Automobil-Anwendungen im Hochtemperaturbereich, vorzugsweise für den Einsatz in Lötprozessen unter bleifreien Bedingungen (lead free soldering), zur Herstellung von Steckverbindern, Mikroschaltern, Mikrotastern und Halbleiterbauteilen, insbesondere Reflektorgehäusen von Leuchtdioden (LED).

**Claims**

**1.** A process for preparing a semiaromatic polyamide, in which

a) a reactant composition is provided, comprising

A) at least one unsubstituted or substituted aromatic dicarboxylic acid or a derivative thereof and
B) at least one aliphatic or cycloaliphatic diamine,
or a salt of at least one compound A) and at least one compound B),

b) the reactant composition provided in step a) is fed into at least one polymerization zone and subjected to a polymerization at elevated temperature and, at least at the start of the polymerization, at elevated pressure,
c) a water-containing gas phase is withdrawn from the polymerization zone in the course of the polymerization, with the proviso that the diamine component B) is used in the reactant composition with a stoichiometric excess of 300 to 650 meq/kg, wherein the stoichiometric excess of the diamine component B) in the reactant composition must be increased by any portion of the diamine component B) which is discharged from the polymerization zone together with the water-containing gas phase in the course of the polymerization.

**2.** The process according to claim 1, wherein the difference between the stoichiometric excess of the diamine component B) in the reactant composition and the portion of the diamine component B) discharged from the polymerization zone together with the water-containing gas phase is in the range from 10 to 600 meq/kg, preferably 50 to 500 meq/kg, especially 100 to 400 meq/kg.

**3.** The process according to either of claims 1 and 2, wherein the reactant composition provided in step a) does not comprise any further components capable of amide formation in addition to components A) and B).

**4.** The process according to either of claims 1 and 2, wherein the reactant composition provided in step a) comprises at least one further component capable of amide formation, selected from

C) unsubstituted or substituted aromatic diamines,
D) aliphatic or cycloaliphatic dicarboxylic acids,
E) monocarboxylic acids,
F) monoamines,
G) lactams,
H) ω-amino acids,
I) compounds which are different than A) to H) and are cocondensable therewith,
and mixtures thereof.

**5.** The process according to any of the preceding claims, wherein the aromatic dicarboxylic acid A) used is terephthalic acid, isophthalic acid or a mixture of terephthalic acid and isophthalic acid.

**6.** The process according to any of the preceding claims, wherein the reactant composition provided in step a) comprises, as component A), terephthalic acid and isophthalic acid in a molar ratio of 100:0 to 50:50, preferably of 90:10 to 60:40.

**7.** The process according to any of the preceding claims, wherein the diamine component B) consists of hexamethylenediamine to an extent of at least 50% by weight, preferably to an extent of at least 75% by weight, particularly to an extent of at least 90% by weight, especially to an extent of at least 92% by weight, based on the total weight of the diamine component B).

**8.** The process according to any of the preceding claims, wherein the polyamide is 6.T/6.I.

9. The process according to any of the preceding claims, wherein the semiaromatic polyamide obtained has a number-average molecular weight $M_n$ within a range from 13 000 to 25 000 g/mol, preferably from 15 000 to 20 000 g/mol.

10. The process according to any of the preceding claims, wherein the semiaromatic polyamide obtained has a polydispersity PD of not more than 3.0, preferably of not more than 2.5.

11. The process according to any of the preceding claims, wherein the semiaromatic polyamide obtained has a quotient of number-average molecular weight $M_n$ to PD of at least 7000, preferably of at least 7500.

12. A semiaromatic polyamide obtainable by a process as defined in any of claims 1 to 11.

13. A polyamide molding composition comprising at least one polyamide obtainable by a process as defined in any of claims 1 to 11, comprising:

A) 25 to 100% by weight of at least one copolyamide obtainable by a process as defined in any of claims 1 to 11,
B) 0 to 75% by weight of at least one filler and reinforcer,
C) 0 to 50% by weight of at least one additive,
where components A) to C) together add up to 100% by weight.

14. A molding produced from a polyamide molding composition according to claim 13, in the form of or as part of a component for the automotive sector, especially selected from cylinder head covers, engine hoods, housings for charge air coolers, charge air cooler valves, intake pipes, intake manifolds, connectors, gears, fan impellers, cooling water tanks, housings or housing parts for heat exchangers, coolant coolers, charge air coolers, thermostats, water pumps, heating elements, securing parts, in the form of or as part of an electrical or electronic component, especially selected from printed circuit boards and parts thereof, housing constituents, films, wires, switches, distributors, relays, resistors, capacitors, windings, lamps, diodes, LEDs, transistors, connectors, regulators, memory chips and sensors.

15. The use of a semiaromatic polyamide obtainable by a process as defined in any of claims 1 to 11 or of a molding composition as defined in claim 13 for production of electrical and electronic components and for high-temperature automotive applications, preferably for use in soldering operations under lead-free conditions (lead free soldering), for production of plug connectors, microswitches, microbuttons and semiconductor components, especially reflector housings of light-emitting diodes (LEDs).

**Revendications**

1. Procédé de fabrication d'un polyamide partiellement aromatique, selon lequel

a) une composition de réactifs est préparée, qui contient :

A) au moins un acide dicarboxylique aromatique non substitué ou substitué ou un dérivé de celui-ci, et
B) au moins une diamine aliphatique ou cycloaliphatique,
ou un sel d'au moins un composé A) et d'au moins un composé B),

b) la composition de réactifs préparée à l'étape a) est introduite dans au moins une zone de polymérisation et soumise à une polymérisation à température élevée et, au moins au début de la polymérisation, à pression élevée,
c) au cours de la polymérisation, une phase gazeuse contenant de l'eau est extraite de la zone de polymérisation, à condition que le composant diamine B) soit utilisé dans la composition de réactifs en un excès stœchiométrique de 300 à 650 méq./kg, dans le cas où une partie du composant diamine B) est déchargée de la zone de polymérisation avec la phase gazeuse contenant de l'eau au cours de la polymérisation, l'excès stœchiométrique du composant diamine B) dans la composition de réactifs devant être plus élevé du montant de la partie du composant diamine déchargé.

2. Procédé selon la revendication 1, dans lequel la différence entre l'excès stœchiométrique du composant diamine B) dans la composition de réactifs et la partie du composant diamine B) déchargée de la zone de polymérisation avec la phase gazeuse contenant de l'eau se situe dans la plage allant de 10 à 600 méq./kg, de préférence de 50 à 500 méq./kg, notamment de 100 à 400 méq./kg.

**3.** Procédé selon l'une quelconque des revendications 1 ou 2, dans lequel la composition de réactifs préparée à l'étape a) ne contient aucun autre composant apte à la formation d'amides en plus des composants A) et B).

**4.** Procédé selon l'une quelconque des revendications 1 ou 2, dans lequel la composition de réactifs préparée à l'étape a) contient au moins un autre composant apte à la formation d'amides, qui est choisi parmi :

C) les diamines aromatiques non substituées ou substituées,
D) les acides dicarboxyliques aliphatiques ou cycloaliphatiques,
E) les acides monocarboxyliques,
F) les monoamines,
G) les lactames,
H) les acides aminés $\omega$,
I) les composés différents de A) à H), condensables avec ceux-ci, et leurs mélanges.

**5.** Procédé selon l'une quelconque des revendications précédentes, dans lequel de l'acide téréphtalique, de l'acide isophtalique ou un mélange d'acide téréphtalique et d'acide isophtalique est utilisé en tant qu'acide dicarboxylique aromatique A).

**6.** Procédé selon l'une quelconque des revendications précédentes, dans lequel la composition de réactifs préparée à l'étape a) contient en tant que composant A) de l'acide téréphtalique et de l'acide isophtalique en un rapport entre les quantités molaires de 100:0 à 50:50, de préférence de 90:10 à 60:40.

**7.** Procédé selon l'une quelconque des revendications précédentes, dans lequel le composant diamine B) est constitué à hauteur d'au moins 50 % en poids, de préférence à hauteur d'au moins 75 % en poids, notamment à hauteur d'au moins 90 % en poids, spécialement à hauteur d'au moins 92 % en poids, par rapport au poids total du composant diamine B), par de l'hexaméthylène-diamine.

**8.** Procédé selon l'une quelconque des revendications précédentes, dans lequel le polyamide consiste en 6.T/6.I.

**9.** Procédé selon l'une quelconque des revendications précédentes, dans lequel le polyamide partiellement aromatique obtenu présente un poids moléculaire moyen en nombre $M_n$ dans une plage allant de 13 000 à 25 000 g/mol, de préférence de 15 000 à 20 000 g/mol.

**10.** Procédé selon l'une quelconque des revendications précédentes, dans lequel le polyamide partiellement aromatique obtenu présente une polydispersité PD d'au plus 3,0, de préférence d'au plus 2,5.

**11.** Procédé selon l'une quelconque des revendications précédentes, dans lequel le polyamide partiellement aromatique obtenu présente un quotient entre le poids moléculaire moyen en nombre $M_n$ et PD d'au moins 7 000, de préférence d'au moins 7 500.

**12.** Polyamide partiellement aromatique, pouvant être obtenu par un procédé tel que défini dans l'une quelconque des revendications 1 à 11.

**13.** Matériau de moulage polyamide, contenant au moins un polyamide, pouvant être obtenu par un procédé tel que défini dans l'une quelconque des revendications 1 à 11, contenant :

a) 25 à 100 % en poids d'au moins un copolyamide, pouvant être obtenu par un procédé tel que défini dans l'une quelconque des revendications 1 à 11,
B) 0 à 75 % en poids d'au moins une matière de remplissage et de renforcement,
C) 0 à 50 % en poids d'au moins un additif,
la somme des composants A) à C) étant de 100 % en poids.

**14.** Corps moulé, fabriqué à partir d'un matériau de moulage polyamide selon la revendication 13, sous la forme ou en tant que partie d'un composant pour le domaine automobile, notamment choisi parmi les couvercles de culasse, les capots de moteur, les boîtiers pour refroidisseur d'air, les volets de refroidisseur d'air, les tubes d'aspiration, les coudes d'aspiration, les connecteurs, les pignons, les hélices de ventilateur, les réservoirs d'eau de refroidissement, les boîtiers ou les parties de boîtiers pour échangeurs de chaleur, les refroidisseurs d'agent de refroidissement, les refroidisseurs d'air, les thermostats, les pompes à eau, les corps chauffants, les parties de fixation, sous la forme ou en tant que partie d'un composant électrique ou électronique, notamment choisi parmi les plaques de conduction et les parties de celles-ci, les constituants de boîtiers, les feuilles, les conduites, les commutateurs, les distributeurs, les relais, les résistances, les condensateurs, les bobines, les lampes, les diodes, les LED, les transistors, les connecteurs, les régulateurs, les puces mémoires et les capteurs.

15. Utilisation d'un polyamide partiellement aromatique, pouvant être obtenu par un procédé tel que défini dans l'une quelconque des revendications 1 à 11, ou d'un matériau de moulage tel que défini dans la revendication 13 pour la fabrication de composants électriques et électroniques et pour des applications automobiles dans des zones à température élevée, de préférence pour l'utilisation dans des processus de brasage en conditions sans plomb (lead free soldering), pour la fabrication de connecteurs enfichables, de microrupteurs, de micropalpeurs et de composants semiconducteurs, notamment de boîtiers de réflecteurs de diodes lumineuses (LED).

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 550315 A1
- EP 0693515 A1
- DE 4142978
- WO 2004055084 A
- EP 384859 A
- US 5270437 A
- EP 1860134 A
- JP 2011225830 B
- EP 0976774 A2
- EP 0129195 A1
- EP 0129196 A1
- WO 0228941 A
- US 4019866 A
- EP 0123377 A2
- DE 4329676 A1
- EP 1095030 A
- EP 584567 A
- DE 102004049342
- FR 1025
- DE 102004050025 A

**In der Beschreibung aufgeführte Nicht-Patentliteratur**

- Gächter/Müller. Hanser Verlag, 1989, vol. 3
- *CHEMICAL ABSTRACTS,* 56386-64-2